(19) Europäisches Patentamt
European Patent Office
Office européen des brevets

(11) **EP 4 503 694 A1**

(12) **EUROPEAN PATENT APPLICATION**

(43) Date of publication:
**05.02.2025  Bulletin 2025/06**

(21) Application number: **24172396.4**

(22) Date of filing: **25.04.2024**

(51) International Patent Classification (IPC):
**H04W 16/22** $^{(2009.01)}$     **H04L 41/14** $^{(2022.01)}$
**H04W 16/18** $^{(2009.01)}$

(52) Cooperative Patent Classification (CPC):
**H04W 16/22;** H04L 41/14; H04W 16/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.08.2023  IN 202311052286**

(71) Applicant: **FUJITSU LIMITED
Kawasaki-shi, Kanagawa 211-8588 (JP)**

(72) Inventors:
• **KUMAR, Niraj
560037 Bangalore (IN)**
• **KURIAN, Nikhil
560037 Bangalore (IN)**

(74) Representative: **Haseltine Lake Kempner LLP
Cheapside House
138 Cheapside
London EC2V 6BJ (GB)**

(54) **FORECASTING 5G USAGE DATA**

(57)   A computer-implemented method comprising predicting 5G usage data including generating at least one of first to third 5G usage data predictions, wherein generating the first 5G usage data prediction comprises using a third model to generate the first 5G usage data prediction based on predicted non-network data of a first intermediate prediction and predicted non-5G network usage data of a second intermediate prediction, wherein generating the second 5G usage data prediction comprises using the third model to generate the second 5G usage data prediction based on predicted non-network data of the first intermediate prediction and predicted non-5G network usage data of a third intermediate prediction, and wherein generating the third 5G usage data prediction comprises using the third model to generate the third 5G usage data prediction based on the predicted non-network data of the first intermediate prediction and predicted non-5G network usage data of a sixth intermediate prediction.

FIGURE 4

**Description**

The present invention relates to forecasting network usage data, and in particular to a computer-implemented method, a computer program, and an information programming apparatus.

Mobile technologies and services contributed €757 billion to European GDP in 2021 and it has been predicted that by 2025, 5G will account for nearly half of mobile connections in Europe (44%) and that major European markets will lag global peers (https://www.telefonica.com/en/communication-room/blog/the-future-of-connectivity-in-europe-perspectives-and-policies/).

Setting up 5G connections and infrastructure requires more hardware resources compared to other networks such as LTE, 4G, and 3G, etc. Achieving maximum resource utilization can reduce the hardware cost and hence may result in cheaper internet and more benefits to network service providers. It is therefore useful to forecast 5G usage data in regions which do not currently have 5G connection, for example to see what infrastructure might be required and/or whether it would be worth the cost/effort of setting up the infrastructure.

In view of the above, an improved method for forecasting 5G usage data in areas without 5G connectivity is desired.

According to an embodiment of a first aspect there is disclosed herein a computer-implemented method comprising performing a forecasting process to predict 5G usage data for a target geographical area (which does not have 5G connectivity/for which historical 5G usage data does not exist or is not available) to include (wherein the forecasting process comprises) generating at least one of first to third 5G usage data predictions for the target geographical area, wherein generating the first 5G usage data prediction comprises: using a first model, which has been trained using data of the target geographical area (to predict non-network data of a second time period based on non-network data of a first time period before the second time period), to generate a first intermediate prediction by predicting non-network data of the target geographical area of a future time period based on non-network data of the target geographical area of a past time period; using a second model, which has been trained using data of at least one reference geographical area (which has or has had 5G connectivity) (to predict non-5G network usage data of the second time period based on non-network data and non-5G network usage data of the first time period), to generate a second intermediate prediction by predicting non-5G network usage data of the target geographical area of the future time period based on the non-network data and non-5G network usage data of the target geographical area of the past time period; and using a third model, which has been trained using data of the at least one reference geographical area (to predict 5G usage data of the second time period based on non-network data and the non-5G network usage data of the second time period), to generate the first 5G usage data prediction by predicting 5G usage data of the target geographical area of the future time period based on the predicted non-network data of the first intermediate prediction and the predicted non-5G network usage data of the second intermediate prediction, wherein generating the second 5G usage data prediction comprises: using a fourth model, which has been trained using data of the target geographical area (to predict non-5G network usage data of the second time period based on the non-network data and non-5G network usage data of the first time period), to generate a third intermediate prediction by predicting non-5G network usage data of the target geographical area of the future time period based on the non-network data and the non-5G network usage data of the target geographical area of the past time period; and using the third model to generate the second 5G usage data prediction by predicting 5G usage data of the target geographical area of the future time period based on the predicted non-network data of the first intermediate prediction and the predicted non-5G network usage data of the third intermediate prediction, wherein generating the third 5G usage data prediction comprises: using a fifth model, which has been trained using data of the at least one reference geographical area (to predict combined network usage data of the second time period based on the non-network data of the first time period (the combined network usage data comprising usage data relating to 5G and non-5G networks)), to generate a fourth intermediate prediction by predicting combined network usage data of the target geographical area of the future time period based on the non-network data of the target geographical area of the past time period (the combined network usage data comprising usage data relating to 5G and non-5G networks); using a sixth model, which has been trained using data of the at least one reference geographical area (to predict 5G usage data of the second time period based on the non-network data and the non-5G network usage data of the first time period), to generate a fifth intermediate prediction by predicting 5G usage data of the target geographical area of the future time period based on the non-network data and the non-5G network usage data of the target geographical area of the past time period; subtracting the predicted 5G usage data of the fifth intermediate prediction from the combined network usage data of the fourth intermediate prediction to generate a sixth intermediate prediction comprising predicted non-5G network usage data of the target geographical area of the future time period; and using the third model to generate the third 5G usage data prediction by predicting 5G usage data of the target geographical area of the future time period based on the predicted non-network data of the first intermediate prediction and the predicted non-5G network usage data of the sixth intermediate prediction, wherein non-network data comprises any of location data, (geographical data,) demographic data, weather data, infrastructure data, and (vehicular) traffic data.

Non-network data may comprise a population or population density of the area concerned.

Non-network data may comprise a population or population density of the area concerned and location data indicating the location and extent of the area concerned.

Non-network data, 5G usage data, and non-5G network usage data may comprise time series data.

Weather data may comprise at least one of temperature, wind speed/flow, rain frequency, and rainfall.

Traffic data may comprise at least one of a number/density of vehicles, an average speed of vehicles, an average journey time of vehicles, a level of congestion, a number of traffic jams, a level of use of a road network, and a maximum transit capacity (of a road network).

Demographic data may comprise at least one of a population/population density and an economic background.

Infrastructure data may comprise at least one of a number of train lines, a number of bus lines, a number of tram lines, a capacity of a nearest airport, a distance to the nearest airport, a frequency of busses, a frequency of trains, and a frequency of trams.

Location data may comprise information indicating a location and/or an extent of the area concerned.

Geographical data may comprise information indicating a location and/or an extent of the area concerned and/or information indicating geographical features of the area concerned.

5G usage data may comprise values over time of at least one variable, the at least one variable comprising any of: a number of active users (over time); a number and/or length of video streams (over time) and/or an amount of data/bandwidth used for video streaming (over time); a number and/or length of calls (over time) and/or an amount of data/bandwidth used for calls (over time); a number and/or size of SMS messages (over time) and/or an amount of data/bandwidth used for SMS messages (over time); and a usage amount of the internet (over time) and/or an amount of data/bandwidth used for internet-related processes (over time) and/or an amount of data/bandwidth exchanged via the internet (over time).

Non-5G network usage data may comprise values over time of at least one variable, the at least one variable comprising any of: a number of active users (over time); a number and/or length of video streams (over time) and/or an amount of data/bandwidth used for video streaming (over time); a number and/or length of calls (over time) and/or an amount of data/bandwidth used for calls (over time); a number and/or size of SMS messages (over time) and/or an amount of data/bandwidth used for SMS messages (over time); and a usage amount of the internet (over time) and/or an amount of data/bandwidth used for internet-related processes (over time) and/or an amount of data/bandwidth exchanged via the internet (over time).

Combined network usage data may comprise values over time of at least one variable, the at least one variable comprising any of: a number of active users (over time); a number and/or length of video streams (over time) and/or an amount of data/bandwidth used for video streaming (over time); a number and/or length of calls (over time) and/or an amount of data/bandwidth used for calls (over time); a number and/or size of SMS messages (over time) and/or an amount of data/bandwidth used for SMS messages (over time); and a usage amount of the internet (over time) and/or an amount of data/bandwidth used for internet-related processes (over time) and/or an amount of data/bandwidth exchanged via the internet (over time).

Non-5G network usage data may comprise usage data of at least one non-5G telecommunications network.

Non-5G network usage data may comprise usage data of the non-5G telecommunications network or networks that exist in the area concerned.

Non-5G network usage data may comprise usage data of at least one of 2G, 3G, 4G, and LTE networks.

Predicted 5G usage data may comprise predicted values over time of at least one variable, the at least one variable comprising any of: a number of active users (over time); a number and/or length of video streams (over time) and/or an amount of data/bandwidth used for video streaming (over time); a number and/or length of calls (over time) and/or an amount of data/bandwidth used for calls (over time); a number and/or size of SMS messages (over time) and/or an amount of data/bandwidth used for SMS messages (over time); and a usage amount of the internet (over time) and/or an amount of data/bandwidth used for internet-related processes (over time) and/or an amount of data/bandwidth exchanged via the internet (over time).

The forecasting process may comprise generating at least two of the first to third 5G usage data predictions and combining the at least two 5G usage data predictions to generate a final 5G forecast.

Combining the at least two 5G usage data predictions may comprise computing a mean 5G usage data prediction (comprising computing a mean for each variable of the at least two 5G usage data predictions).

The forecasting process may comprise generating at least two of the first to third 5G usage data predictions and combining the at least two 5G usage data predictions to generate a predicted range of 5G usage data.

The forecasting process may comprise generating the first to third 5G usage data predictions and combining the first to third 5G usage data predictions to generate a final 5G forecast.

Combining the first to third 5G usage data predictions may comprise computing a mean 5G usage data prediction (comprising computing a mean for each variable of the first to third 5G usage data predictions).

The forecasting process may comprise generating the first to third 5G usage data predictions and combining the first to third 5G usage data predictions to generate a predicted range of 5G usage data.

Combining the first to third 5G usage data predictions to generate a final 5G forecast may comprise, for at least one variable (of the first to third 5G usage data predictions): computing the mean of the variable's predicted values (at each time step) in the first to third 5G usage data predictions; and selecting two values among the variable's predicted values (at each time step) which are closest to the (corresponding) mean as endpoints of a predicted range for the variable.

The first model may have been been trained based on non-network data of the target geographical area of a first time period and non-network data of the target geographical area of a second time period before the first time period (to predict to predict the non-network data of the target geographical area of the second time period based on the non-network data of the target geographical area of the first time period) and/or the second model may have been trained based on non-5G network usage data of the at least one reference geographical area of the second time period and based on non-network data and non-5G network usage data of the at least one reference geographical area of the first time period (to predict the non-5G network usage data of the at least one reference geographical area of the second time period based on the non-network data and the non-5G network usage data of the at least one reference geographical area of the first time period); and/or the third model may have been trained based on 5G usage data, non-network data, and the non-5G network usage data of the at least one reference geographical area of the second time period (to predict the 5G usage data of the at least one reference geographical area of the second time period based on the non-network data and the non-5G network usage data of the at least one reference geographical area of the second time period); and/or the fourth model may have been trained based on non-5G network usage data of the target geographical area of the second time period and based on the non-network data and non-5G network usage data of the target geographical area of the first time period (to predict the non-5G network usage data of the target geographical area of the second time period based on the non-network data and the non-5G network usage data of the target geographical area of the first time period); and/or the fifth model may have been trained based on combined network usage data of the at least one reference geographical area of the second time period (, wherein the combined network usage data comprises usage data relating to 5G and non-5G networks,) and based on the non-network of the at least one reference geographical area of the first time period (to predict the combined network usage data of the at least one reference geographical area of the second time period based on the non-network data of the at least one reference geographical area of the first time period); and/or the sixth model may have been trained based on the 5G usage data of the at least one reference geographical area of the second time period and based on the non-network data and the non-5G network usage data of the at least one reference geographical area of the first time period (to predict the 5G usage data of the at least one reference geographical area of the second time period based on the non-network data and the non-5G network usage data of the at least one reference geographical area of the first time period).

The computer-implemented method may further comprise performing a training process before performing the forecasting process, the training process comprising training at least one of the first to sixth models.

The training process may comprise: based on non-network data of the target geographical area of a first time period and non-network data of the target geographical area of a second time period before the first time period, training the first model to predict the non-network data of the target geographical area of the second time period based on the non-network data of the target geographical area of the first time period; based on non-5G network usage data of the at least one reference geographical area of the second time period and based on non-network data and non-5G network usage data of the at least one reference geographical area of the first time period, training the second model to predict the non-5G network usage data of the at least one reference geographical area of the second time period based on the non-network data and the non-5G network usage data of the at least one reference geographical area of the first time period; based on 5G usage data, non-network data, and the non-5G network usage data of the at least one reference geographical area of the second time period, training the third model to predict the 5G usage data of the at least one reference geographical area of the second time period based on the non-network data and the non-5G network usage data of the at least one reference geographical area of the second time period; based on non-5G network usage data of the target geographical area of the second time period and based on the non-network data and non-5G network usage data of the target geographical area of the first time period, training the fourth model to predict the non-5G network usage data of the target geographical area of the second time period based on the non-network data and the non-5G network usage data of the target geographical area of the first time period; based on combined network usage data of the at least one reference geographical area of the second time period and based on the non-network of the at least one reference geographical area of the first time period, training the fifth model to predict the combined network usage data of the at least one reference geographical area of the second time period based on the non-network data of the at least one reference geographical area of the first time period (wherein the combined network usage data comprises usage data relating to 5G and non-5G networks); and based on the 5G usage data of the at least one reference geographical area of the second time period and based on the non-network data and the non-5G network usage data of the at least one reference geographical area of the first time period, training the sixth model to predict the 5G usage data of the at least one reference geographical area of the second time period based on the non-network data and the non-5G network usage data of the at least one reference geographical area of the first time period.

The first to sixth models may be/comprise encoder-decoder (network) models.

The first to sixth models each may comprise a deep neural network, DNN.

The first to sixth models may be/comprise self-attention-based models.

The first to sixth models may be/comprise self-attention-based encoder-decoder (network) models.

The first to sixth models each may comprise a self-attention network.

The first to sixth models each may comprise a (bidirectional) long short-term memory, LSTM, layer.

The first to sixth models each may comprise a first (bidirectional) long short-term memory, LSTM, layer, a first at least one deep neural network, DNN, a self-attention network, a second LSTM layer, and a second at least one DNN.

The first model may comprise a first (bidirectional) long short-term memory, LSTM, layer (to receive data on which the prediction concerned is based), a first at least one deep neural network, DNN, a self-attention network, a second LSTM layer, and a second at least one DNN (to output predicted data).

The second model may comprise a pair of first (bidirectional) long short-term memory, LSTM, layers (to receive data on which the prediction concerned is based), a concatenation layer, a first at least one deep neural network, DNN, a self-attention network, a second LSTM layer, and a second at least one DNN (to output predicted data).

The third model may comprise a pair of first (bidirectional) long short-term memory, LSTM, layers (to receive data on which the prediction concerned is based), a concatenation layer, a first at least one deep neural network, DNN, a self-attention network, a second LSTM layer, and a second at least one DNN (to output predicted data).

The fourth model may comprise a pair of first (bidirectional) long short-term memory, LSTM, layers (to receive data on which the prediction concerned is based), a concatenation layer, a first at least one deep neural network, DNN, a self-attention network, a second LSTM layer, and a second at least one DNN (to output predicted data).

The fifth model may comprise a first (bidirectional) long short-term memory, LSTM, layer (to receive data on which the prediction concerned is based), a first at least one deep neural network, DNN, a repeat vector layer, a pair of self-attention networks, a pair of second LSTM layers, and a pair of second at least one DNNs (to output predicted data).

The sixth model may comprise a pair of first (bidirectional) long short-term memory, LSTM, layers (to receive data on which the prediction concerned is based), a concatenation layer, a first at least one deep neural network, DNN, a self-attention network, a second LSTM layer, and a second at least one DNN (to output predicted data).

Each of the second, third, fourth, and sixth models may comprise a pair of first (bidirectional) long short-term memory, LSTM, layers (to receive data on which the prediction concerned is based), a concatenation layer, a first at least one deep neural network, DNN, a self-attention network, a second LSTM layer, and a second at least one DNN (to output predicted data).

According to an embodiment of a second aspect there is disclosed herein a computer program which, when run on a computer, causes the computer to carry out a method comprising: performing a forecasting process to predict 5G usage data for a target geographical area (which does not have 5G connectivity/for which historical 5G usage data does not exist or is not available) to include (wherein the forecasting process comprises) generating at least one of first to third 5G usage data predictions for the target geographical area, wherein generating the first 5G usage data prediction comprises: using a first model, which has been trained using data of the target geographical area (to predict non-network data of a second time period based on non-network data of a first time period before the second time period), to generate a first intermediate prediction by predicting non-network data of the target geographical area of a future time period based on non-network data of the target geographical area of a past time period; using a second model, which has been trained using data of at least one reference geographical area (which has or has had 5G connectivity) (to predict non-5G network usage data of the second time period based on non-network data and non-5G network usage data of the first time period), to generate a second intermediate prediction by predicting non-5G network usage data of the target geographical area of the future time period based on the non-network data and non-5G network usage data of the target geographical area of the past time period; and using a third model, which has been trained using data of the at least one reference geographical area (to predict 5G usage data of the second time period based on non-network data and the non-5G network usage data of the second time period), to generate the first 5G usage data prediction by predicting 5G usage data of the target geographical area of the future time period based on the predicted non-network data of the first intermediate prediction and the predicted non-5G network usage data of the second intermediate prediction, wherein generating the second 5G usage data prediction comprises: using a fourth model, which has been trained using data of the target geographical area (to predict non-5G network usage data of the second time period based on the non-network data and non-5G network usage data of the first time period), to generate a third intermediate prediction by predicting non-5G network usage data of the target geographical area of the future time period based on the non-network data and the non-5G network usage data of the target geographical area of the past time period; and using the third model to generate the second 5G usage data prediction by predicting 5G usage data of the target geographical area of the future time period based on the predicted non-network data of the first intermediate prediction and the predicted non-5G network usage data of the third intermediate prediction, wherein generating the third 5G usage data prediction comprises: using a fifth model, which has been trained using data of the at least one reference geographical area (to predict combined network usage data of the second time period based on the non-network data of the first time period (the combined network usage data comprising usage data relating to 5G and non-5G networks)), to generate a fourth intermediate prediction by predicting combined network usage data of the target geographical area of the future time period based on the non-network data of the target geographical area of the past time period (the combined network usage data comprising usage data relating to 5G and non-5G networks); using a sixth model, which has been trained using data of the at least one reference geographical area (to predict 5G usage data of the second time period based on the non-network data and the non-5G network usage data of the first time period), to generate a fifth intermediate prediction by predicting 5G usage data of the target geographical area of the future time period based on the non-network data and the non-5G network usage data of the target geographical area of the past time period; subtracting the predicted 5G usage data of the fifth intermediate prediction from the combined network usage data of the fourth intermediate prediction to generate a sixth intermediate prediction comprising predicted non-5G network usage data of the target geographical area of the future time period; and using the third model to generate the third 5G usage data prediction by predicting 5G usage data of the target geographical area of the future time period based on the predicted non-network data of the first intermediate prediction and the predicted non-5G network usage data of the sixth intermediate prediction, wherein non-network data comprises any of location data, (geographical data,) demographic data, weather data, infrastructure data, and (vehicular) traffic data.

According to an embodiment of a third aspect there is disclosed herein an information processing apparatus comprising a memory and a processor connected to the memory, wherein the processor is configured to: perform a forecasting process to predict 5G usage data for a target geographical area (which does not have 5G connectivity/for which historical 5G usage data does not exist or is not available) to include (wherein the forecasting process comprises) generating at least one of first to third 5G usage data predictions for the target geographical area, wherein generating the first 5G usage data prediction comprises: using a first model, which has been trained using data of the target geographical area (to predict non-network data of a second time period based on non-network data of a first time period before the second time period), to generate a first intermediate prediction by predicting non-network data of the target geographical area of a future time period based on non-network data of the target geographical area of a past time period; using a second model, which has been trained using data of at least one reference geographical area (which has or has had 5G connectivity) (to predict non-5G network usage data of the second time period based on non-network data and non-5G network usage data of the first time period), to generate a second intermediate prediction by predicting non-5G network usage data of the target geographical area of the future time period based on the non-network data and non-5G network usage data of the target geographical area of the past time period; and using a third model, which has been trained using data of the at least one reference geographical area (to predict 5G usage data of the second time period based on non-network data and the non-5G network usage data of the second time period), to generate the first 5G usage data prediction by predicting 5G usage data of the target geographical area of the future time period based on the predicted non-network data of the first intermediate prediction and the predicted non-5G network usage data of the second intermediate prediction, wherein generating the second 5G usage data prediction comprises: using a fourth model, which has been trained using data of the target geographical area (to predict non-5G network usage data of the second time period based on the non-network data and non-5G network usage data of the first time period), to generate a third intermediate prediction by predicting non-5G network usage data of the target geographical area of the future time period based on the non-network data and the non-5G network usage data of the target geographical area of the past time period; and using the third model to generate the second 5G usage data prediction by predicting 5G usage data of the target geographical area of the future time period based on the predicted non-network data of the first intermediate prediction and the predicted non-5G network usage data of the third intermediate prediction, wherein generating the third 5G usage data prediction comprises: using a fifth model, which has been trained using data of the at least one reference geographical area (to predict combined network usage data of the second time period based on the non-network data of the first time period (the combined network usage data comprising usage data relating to 5G and non-5G networks)), to generate a fourth intermediate prediction by predicting combined network usage data of the target geographical area of the future time period based on the non-network data of the target geographical area of the past time period (the combined network usage data comprising usage data relating to 5G and non-5G networks); using a sixth model, which has been trained using data of the at least one reference geographical area (to predict 5G usage data of the second time period based on the non-network data and the non-5G network usage data of the first time period), to generate a fifth intermediate prediction by predicting 5G usage data of the target geographical area of the future time period based on the non-network data and the non-5G network usage data of the target geographical area of the past time period; subtracting the predicted 5G usage data of the fifth intermediate prediction from the combined network usage data of the fourth intermediate prediction to generate a sixth intermediate prediction comprising predicted non-5G network usage data of the target geographical area of the future time period; and using the third model to generate the third 5G usage data prediction by predicting 5G usage data of the target geographical area of the future time period based on the predicted non-network data of the first intermediate prediction and the predicted non-5G network usage data of the sixth intermediate prediction, wherein non-network data comprises any of location data, (geographical data,) demographic data, weather data, infrastructure data, and (vehicular) traffic data.

Features relating to any aspect/embodiment may be applied to any other aspect/embodiment.

Reference will now be made, by way of example, to the accompanying drawings, in which:

Figure 1 is a diagram illustrating example data;
Figure 2 is a diagram illustrating example data;
Figure 3 is a diagram illustrating a representation of training processes;
Figure 4 is a diagram illustrating a forecasting process;
Figure 5 is a diagram illustrating a forecasting process;
Figure 6 is a diagram illustrating a forecasting process;
Figure 7 is a diagram useful for understanding embodiments;
Figure 8 is a diagram illustrating a forecasting process;
Figure 9 is a diagram illustrating an example architecture;
Figure 10 is a diagram illustrating an example architecture;
Figure 11 is a diagram illustrating an example architecture;
Figure 12 is a diagram illustrating an example architecture;
Figure 13 is a diagram illustrating an example architecture;
Figure 14 is a diagram illustrating an example architecture;
Figure 15 is a diagram illustrating an example architecture;
Figure 16 is a diagram illustrating an example architecture;
Figure 17 is a diagram illustrating an example architecture; and
Figure 18 is a diagram illustrating an apparatus.

The following definitions may be used in the description but are not exhaustive.

Cold-start forecasting: Generating a forecast for a variable for which there is no historical data (or without using historical data about that variable). Common in the e-commerce domain, for example in which a forecast for a new product (the sales thereof, for example) is generated but because the product is new there is no historical data of the product.

Multi-variate forecasting: Generating a forecast for multiple variables together and/or based on multiple variables together.

Spatio-temporal forecasting: Generating a forecast comprising and/or based on variables that vary across both time and space.

Distant Supervision: A machine learning/deep learning technique that may be used to learn direct and/or latent relations between entities or features from data in different distributions. Distant supervision in this sense is based on the concept of a distant distribution in natural language processing (NLP). In NLP, the core intuition behind distant supervision is that if two entities are related in a knowledge base and/or clean unstructured text data, then any sentence that mentions those two entities is likely to express that relation. Distant supervision may comprise training a machine learning model using training data generated based on existing training data.

Forecasting 5G usage data in an area which does not currently have 5G connectivity requires a cold-start forecasting approach because historical data of 5G usage for that area does not exist. Cold start 5G network usage forecasting provides valuable insights that may support informed decision-making, efficient resource allocation, improved service delivery, and enhanced user experiences, benefiting various stakeholders in the telecommunications industry.

In the e-commerce domain cold-start forecasting may be used to forecast sales of a new product. For example, historical data related to user behavior and related to sales of other similar products (among other data) may be used to forecast sales data for the new product. This technique for cold-start forecasting in the e-commerce domain may be referred to herein as a first comparative method.

In the weather domain, cold-start forecasting may be used to predict weather patterns in an area in which weather data has not previously been collected. For example, historical data related to weather in other areas, geographical features, and weather patterns in other areas may be used to forecast weather data for the new area. This forecasting comprises, for example, using existing overlapping weather patterns of other areas. This technique for cold-start weather forecasting may be referred to herein as a second comparative method.

The approaches used in the first and second comparative methods are not appropriate for generating forecasts of 5G usage data in an area which does not currently have 5G connectivity. That is, those approaches, when applied to cold-start 5G forecasting, do not generate useful forecasts.

A reason the approach of the first comparative method is not appropriate for 5G forecasting is because the distribution of data in a 5G area is too different from the distribution of data in a non-5G area. That is, the data of the 5G area belongs to a different distribution to that of the data of the non-5G area. In contrast, in the first comparative method there exists products for which historical data exists which are similar to the new product, as well as a common user base. It may be considered that a reason for the difference in distributions in the cold-start 5G forecasting case is because 5G and other networks (e.g. 4G, 3G, 2G, LTE, etc.) are too different from each other.

A reason that the approach of the second comparative method is not appropriate for 5G forecasting is that, similar to the above reasoning, the data of the 5G area belongs to a different distribution to that of the data of the non-5G area. In contrast, in the second comparative method the distributions of the data of the different geographical areas are more similar to each other (at least for some geographical areas). Another reason is that in the second comparative method there exist overlapping weather patterns as well as an overall common weather pattern/background for the entire world (or at least for large areas comprising multiple smaller areas). Such patterns can be learned and used in the forecasting. In contrast, in the cold-start 5G forecasting scenario there are no such overlapping patterns (or at least no useful overlapping patterns).

A problem with cold-start forecasting for 5G usage may be set out as follows. Let D = {do, di, $d_2$, ..., di, ... $d_n$}, where D is the set of time series data distributions from areas having 5G network usage history. $d_i$ represents the $i^{th}$ area having spatial information, 5G time series usage history, and Non-5G (e.g. 2G, 3G, 4G and other networks) network usage history. Here, area means a geographical area having 5G network infrastructure (for example in at least a 1 $Km^2$ area).

Let D' = {do', $d_1$', $d_2$', ..., di', ... $d_n$'}, where, D' is the set of time series data distributions from areas having No 5G network usage history. $d_i$' represents the $j^{th}$ area having spatial information and Non-5G (e.g. 2G, 3G, 4G and other networks) network usage history. Here, area means geographical area having Non-5G network infrastructure (for example in at least a 1 $Km^2$ area).

Here, D and D' are different distributions. There is no overlap or direct correlation (at least no useful overlap or correlation - for example, there may be overlap or correlation between e.g. weather data but this is not useful) between D and D'. An aim of aspects disclosed herein is to forecast the 5G time series usage for any given $j^{th}$ area from D' (represented as $d_j$') for which 5G usage history is not available. Aspects disclosed herein may provide direct forecasted values and/or ranges of values (e.g. minimum and maximum) values.

Aspects disclosed herein may be considered to comprise learning the time series correlation patterns between different variables of the distributions D, learning the timeseries patterns of different variables of the given distribution from D' (say, $d_j$'), and using the (distantly) learned correlation patterns of different variables of the distribution D and time series patterns of $d_j$' to forecast the 5G usage timeseries data for $d_j$'.

Aspects disclosed herein may comprise a cold-start forecasting approach to indirectly learn patterns from different distributions (i.e. data of non-5G areas and data of 5G areas) and to use the (distantly) learned patterns to forecast the 5G usage data at for a given area or areas. It may be considered that the learning of patterns from different distributions employs distant-supervision-based strategies, as explained later.

The data used in the methods disclosed herein may be broadly divided into three categories: non-network data; non-5G network usage data; and 5G network usage data.

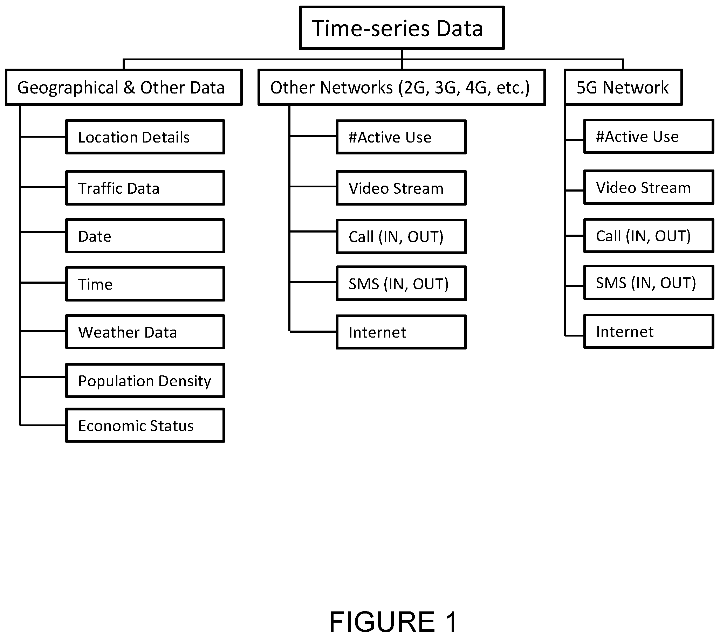

Non-network data may be referred to as "geographical and other data", non-5G network data may be referred to as "other networks data" or "other networks (2G, 3G, 4G, etc.) data", and 5G network usage data may be referred to as "5G network data". Figure 1 illustrates a representation of the three categories of data.

Each category of data may comprise any number of variables. In the example representation shown in Figure 1, the non-network data comprises location details, traffic data, date, time, weather data, population density, and economic status. In the example representation shown in Figure 1, the non-5G network usage data comprises a number of active users (#active use), video stream (which may comprise a number and/or length of video streams and/or an amount of data/bandwidth used for video streaming), call (in, out) (which may comprise a number and/or length of calls and/or an amount of data/bandwidth used for calls), SMS (in, out) (which may comprise a number and/or length of SMS messages and/or an amount of data/bandwidth used for SMS messages), and internet (which may comprise an amount of data/bandwidth used for internet-related processes and/or an amount of data/bandwidth exchanged via the internet). In the example representation shown in Figure 1, the 5G network usage data comprises the same variables as the non-5G network usage data.

Call (in) means incoming call, call (out) means outgoing call, SMS (in) means incoming SMS, and SMS(out) means outgoing SMS. All these variables use some network bandwidth. Methods disclosed herein will work for any number of other variables which use network bandwidth, for example, IOT-based variables, which use internet bandwidth, and so on.

As shown in Figure 1, the data is time series data. The data may be considered to comprise time series data. Some variables, such as location data, may not vary with time. For example the location data may be data defining the location and or extent of an area to which the data corresponds/for which the data has been collected. The variable "time" may merely comprise time steps to which other variables of the data corresponds. An example time unit that may be used is, for example, 30 minutes, 1.00 hour etc. The time unit may be used to measure/collect the data of other variables (e.g. traffic, weather, 5G & Other network usage, etc.). The size of an area may be defined by the location variable. Generally, service provider companies divide a coverage area into cells. The size of a cell may be 200 $m^2$, 500 $m^2$, among other sizes. An area as used herein (e.g. a target area or a reference area) may correspond to or be a cell.

The weather data may comprise at least one of temperature, wind speed/flow, rain frequency, and rainfall (amount). The traffic data may comprise at least one of a number of vehicles, an average speed of vehicles, and an average journey time of vehicles. The traffic data may comprise at least one of a number/density of vehicles, an average speed of vehicles, an average journey time of vehicles, a level of congestion, a number of traffic jams, a level of use of a road network, and a maximum transit capacity (of a road network).

The non-network data may comprise infrastructure data which may comprise any of a number of rail lines, a number of bus lines, a number of tram lines, distance to the nearest airport, the capacity of the nearest airport, and an average frequency of busses and/or trains and/or trams, among others. It will be appreciated that some of these variables may not vary with time. The non-network data may comprise demographic data which may include any of the population or population density, and the economic status of the area or of the people therein, among others.

The variables illustrated in Figure 1 are not exhaustive or essential. In any example, at least one of the variables for each category may be used/present. Any forecast disclosed herein may comprise at least one of the variables. The data described above is specific to a given area. For example, the variable "number of active users" is the number of active users in a given area (target or reference, for example). Although not shown in Figure 1, another category of data, "combined network usage data" may be utilized. The combined network usage data comprises the 5G usage data and the non-5G network usage data summed together. For example, the number of active users for a given area in the combined network usage data comprises the number of active users in the area in the 5G usage data added to the number of active users in the area in the non-5G network usage data.

Non-network usage data comprises data usage relating to non-5G networks, for example any of 2G, 3G, 4G, LTE, etc. (for example whatever (telecommunications) networks are installed/used in the area concerned).

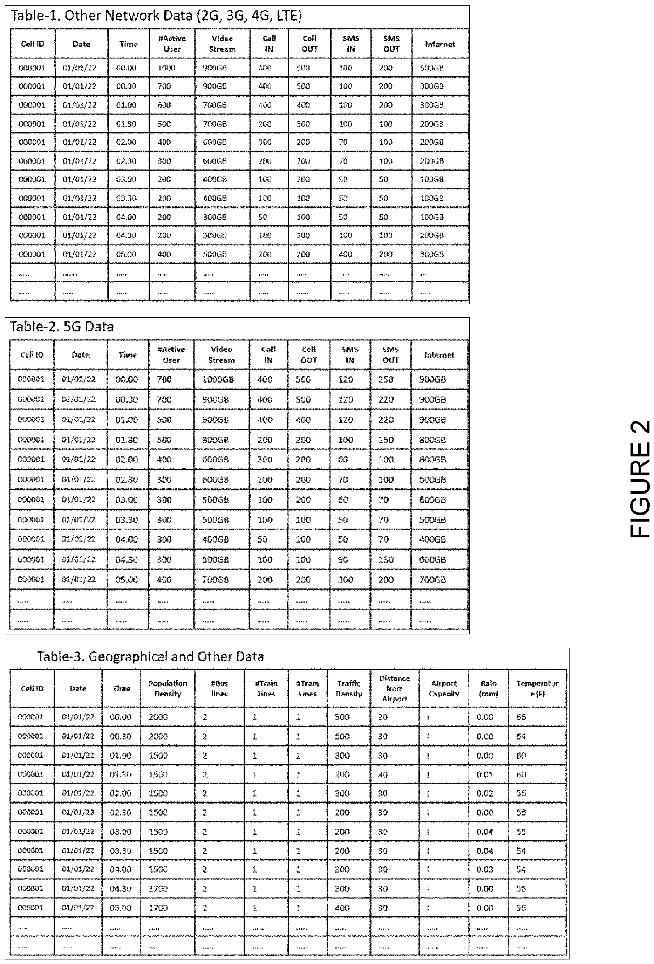

Figure 2 illustrates some example data. Table 1 illustrates an example of non-5G network usage data, table 2 an example of 5G usage data, and table 3 an example of non-network data. In tables 1 and 2 the data for the "internet" variable is the amount of data exchanged over the internet in the area concerned during each time step, excluding the data exchanged for the purpose of video streaming. In general, the amount of data exchanged over the internet may comprise the data exchanged for the purposes of any of video streaming, calls, and messages, or may omit any of those data amounts.

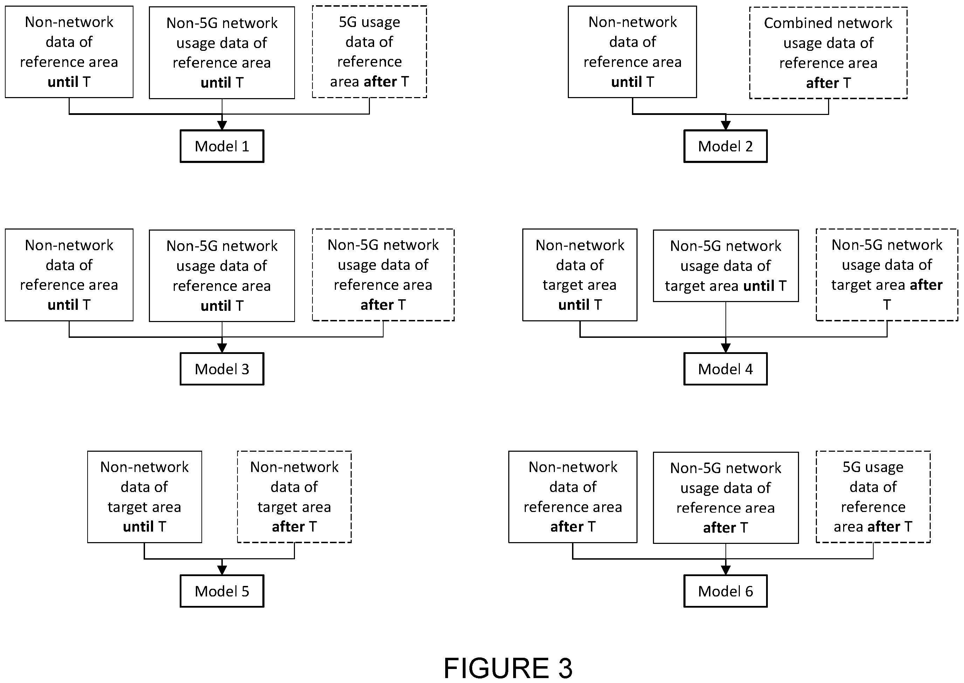

Figure 3 is a diagram illustrating a representation of a training process. That is, Figure 3 represents a training process for training models to be used in forecasting processes. A training process according to a running example comprises training each of models 1-6 and will be described below. Figure 3 illustrates the training data used to train each model, i.e. the training data input to each model. For each model, the box which has a dotted outline indicates the data the model is being trained to predict, and the solid line boxes indicate the data upon which the model's prediction is to be based. Example architectures of the models are described later.

In the following description of the training process according to the running example, the reference area is an area for which 5G usage data is available and the target area is an area for which 5G usage data is not available. The reference area may be considered an area having 5G connectivity (or at least which had 5G connectivity in the past). The target area may be considered an area which does not have 5G connectivity (or did not have it in the past so that (sufficient) 5G usage data is not available). Of course, the target area does not necessarily not have 5G connectivity. For example, it may be that 5G usage data has not been collected for the target area or is not available for the target area. Alternatively, 5G usage data may be available for the target area but it is desired to forecast 5G usage data without using the historical 5G usage data for the target area. Having and not having 5G connectivity may be referred to as having and not having 5G network infrastructure.

The training process according to the running example comprises training model 1 using non-network data of a reference area before time T, non-5G network usage data of the reference area before time T, and 5G usage data of the reference area after time T. Model 1 is trained to predict the 5G usage data of the reference area after time T based on the non-network data of a reference area before time T and the non-5G network usage data of the reference area before time T.

"Until time T" may be used interchangeably herein with "before time T". The time period referred to as "before time T" may be referred to as a first time period. The time period referred to as "after time T" may be referred to as a second time period.

In other words, training model 1 comprises training model 1 to predict 5G usage data of the reference area of the second time period based on the non-network data of the reference area of the first time period and the non-5G network usage data of the reference area of the first time period.

The training process according to the running example comprises training model 2 using non-network data of the reference area before T and combined network usage data of the reference area after T. Model 2 is trained to predict the combined network usage data of the reference area after T based on the non-network data of the reference area before T. In other words, training model 2 comprises training model 2 to predict the combined network usage data of the reference area of the second time period based on the non-network data of the reference area of the first time period.

The training process according to the running example comprises training model 3 using non-network data of the reference area before T, non-5G network usage data of the reference area before T, and non-5G network usage data of the reference area after T. Model 3 is trained to predict the non-5G network usage data of the reference area after T based on the non-network data of the reference area before T and the non-5G network usage data of the reference area before T. In other words, training model 3 comprises training model 3 to predict the non-5G network usage data of the reference area of the second time period based on the non-network data of the reference area of the first time period and the non-5G network usage data of the reference area of the first time period.

The training process according to the running example comprises training model 4 using non-network data of a target area before T, non-5G network usage data of the target area before T, and non-5G network usage data of the target area after T. Model 4 is trained to predict the non-5G network usage data of the target area after T based on the non-network data of the target area before T and the non-5G network usage data of the target area before T. In other words, training model 4 comprises training model 4 to predict the non-5G network usage data of the target area of the second time period based on the non-network data of the target area of the first time period and the non-5G network usage data of the target area of the first time period.

The training process according to the running example comprises training model 5 using non-network data of the target area before T and non-network data of the target area after T. Model 5 is trained to predict the non-network data of the target area after T based on the non-network data of the target area before T. In other words, training model 5 comprises training model 5 to predict the non-network data of the target area of the second time period based on the non-network data of the target area of the first time period.

The training process according to the running example comprises training model 6 using non-network data of the reference area after T, non-5G network usage data of the reference area after T, and 5G usage data of the reference area after T. Model 6 is trained to predict the 5G usage data of the reference area after T based on the non-network data of the reference area after T and the non-5G network usage data of the reference area after T. In other words, training model 6 comprises training model 6 to predict the 5G usage data of the reference area of the second time period based on the non-network data of the reference area of the second time period and the non-5G network usage data of the reference area of the second time period.

As disclosed herein, model 1 may be referred to as a sixth model, model 2 as a fifth model, model 3 as a second model, model 4 as a fourth model, model 5 as a first model, and model 6 as a third model, as shown below:

model 1 - sixth model
model 2 - fifth model
model 3 - second model
model 4 - fourth model
model 5 - first model
model 6 - third model

Training any of models 1-6 comprises adjusting at least one network weight of the model (for example to bring the prediction output by the model to or towards the ground truth data). Training any of models 1-6 may comprise utilizing traditional deep learning-based algorithms, for example traditional supervised deep learning algorithms. That is, training any of the models 1-6 may comprise deep learning-based training.

Disclosed herein are forecasting processes for forecasting 5G usage data, i.e. for predicting/forecasting 5G usage data in a target area in a future time period. For example, disclosed herein are first to third forecasting processes.

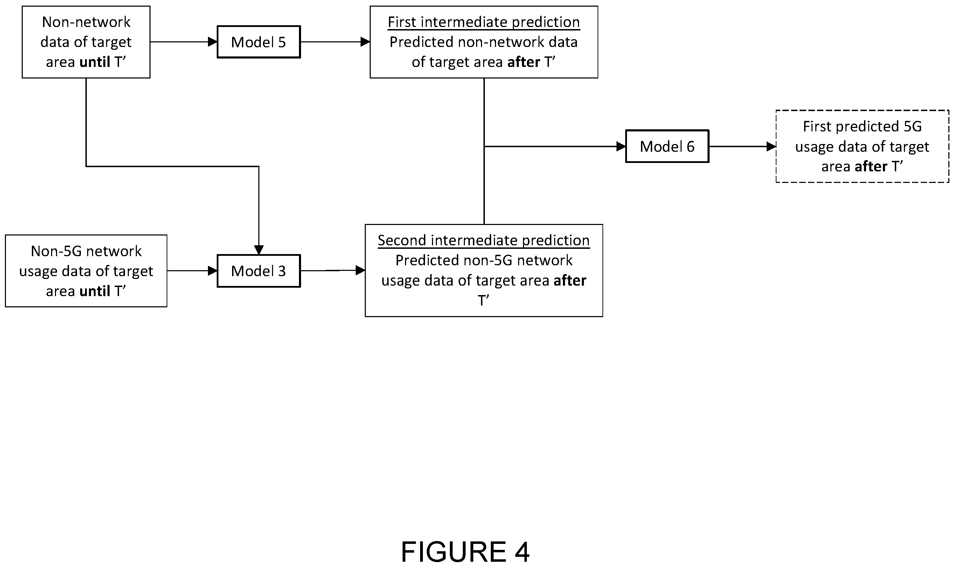

Figure 4 is a diagram illustrating a first forecasting process. The first forecasting process is for generating first predicted 5G usage data of a target area after time T'. The first forecasting process comprises, using the first model (model 5), generating a first intermediate prediction by predicting non-network data of the target area after T' based on the non-network data of the target area before T'. The first forecasting process further comprises, using the second model (model 3), generating a second intermediate prediction by predicting non-5G network usage data of the target area after T' based on the non-network data of the target area before T' and the non-5G network usage data of the target area before T'. The first forecasting process further comprises generating the first 5G usage data prediction by, using the third model (model 6), predicting 5G usage data of the target area after time T' based on the predicted non-network data of the first intermediate prediction and the predicted non-5G network usage data of the second intermediate prediction.

"Until time T'''" may be used interchangeably herein with "before time T'''". The time period referred to as "before time T'''" may be referred to as a past time period. The time period referred to as "after time T'''" may be referred to as a future time period.

In other words, the first forecasting process comprises

- using the first model (model 5) which has been trained using data of the target geographical area, generating a first intermediate prediction by predicting non-network data of the target geographical area of the future time period based on the non-network data of the target geographical area of the past time period,
- using the second model (model 3) which has been trained using data of the reference geographical area, generating a second intermediate prediction by predicting non-5G network usage data of the target geographical area of the future time period based on the non-network data of the target geographical area of the past time period and the non-5G network usage data of the target geographical area of the past time period, and
- generating the first 5G usage data prediction by, using the third model (model 6) which has been trained using data of the reference geographical area, predicting 5G usage data of the target geographical area of the future time period based on the predicted non-network data of the first intermediate prediction and the predicted non-5G network usage data of the second intermediate prediction.

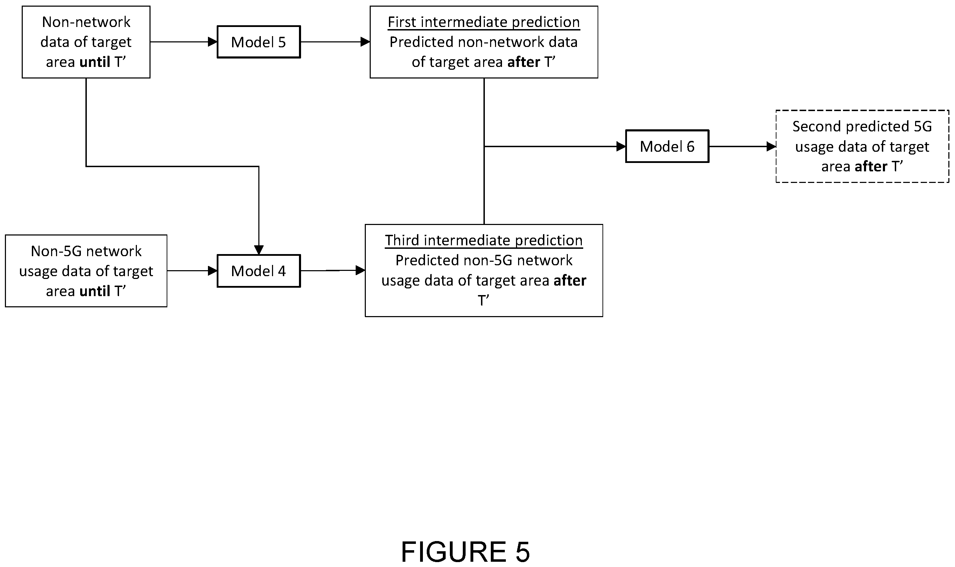

Figure 5 is a diagram illustrating a second forecasting process. The second forecasting process is for generating second predicted 5G usage data of a target area after time T'. The second forecasting process comprises, using the first model (model 5), generating a first intermediate prediction by predicting non-network data of the target area after T' based on the non-network data of the target area before T'. The second forecasting process further comprises, using the fourth model (model 4), generating a third intermediate prediction by predicting non-5G network usage data of the target area after T' based on the non-network data of the target area before T' and the non-5G network usage data of the target area before T'. The second forecasting process further comprises generating the second 5G usage data prediction by, using the third model (model 6), predicting 5G usage data of the target area after time T' based on the predicted non-network data of the first intermediate prediction and the predicted non-5G network usage data of the third intermediate prediction.

In other words, the second forecasting process comprises

- using the first model (model 5) which has been trained using data of the target geographical area, generating a first intermediate prediction by predicting non-network data of the target geographical area of the future time period based on the non-network data of the target geographical area of the past time period,
- using a fourth model (model 4) which has been trained using data of the target geographical area, generating a third intermediate prediction by predicting non-5G network usage data of the target geographical area of the future time period based on the non-network data and the non-5G network usage data of the target geographical area of the past time period; and
- generating the second 5G usage data prediction by, using the third model (model 6), predicting 5G usage data of the target geographical area of the future time period based on the predicted non-network data of the first intermediate prediction and the predicted non-5G network usage data of the third intermediate prediction.

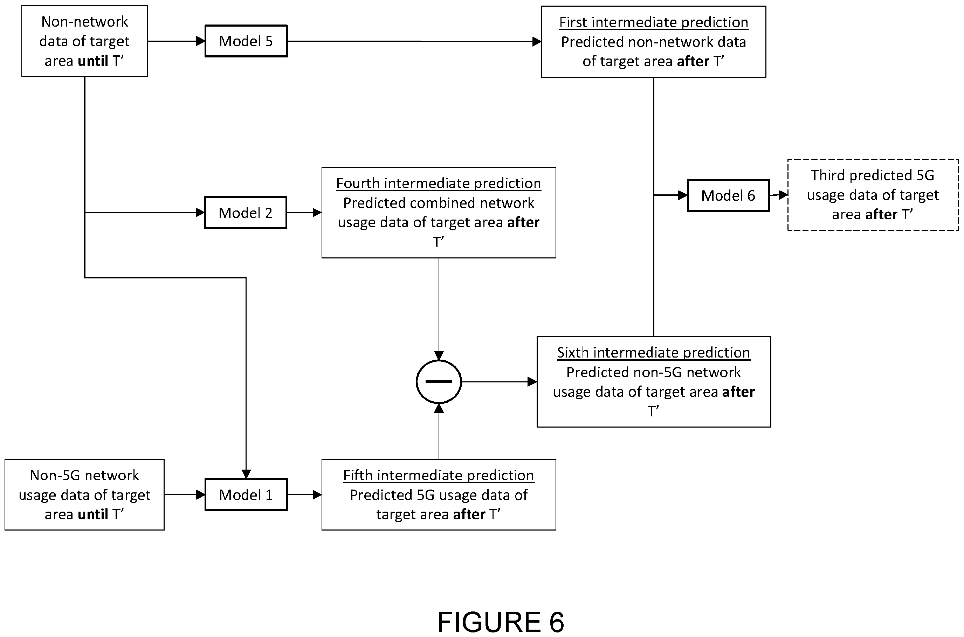

Figure 6 is a diagram illustrating a third forecasting process. The third forecasting process is for generating third predicted 5G usage data of a target area after time T'. The third forecasting process comprises, using the first model (model 5), generating a first intermediate prediction by predicting non-network data of the target area after T' based on the non-network data of the target area before T'.

The third forecasting process further comprises, using the fifth model (model 2), generating a fourth intermediate prediction by predicting combined network usage data of the target area after T' based on the non-network data of the target area before T'. The third forecasting process further comprises, using the sixth model (model 1), generating a fifth intermediate prediction by predicting 5G usage data of the target area after T' based on the non-network data of the target area before T' and the non-5G network usage data of the target area before T'.

The third forecasting process further comprises combining the fourth and fifth intermediate predictions to generate a sixth intermediate prediction. The combining comprises subtracting the predicted 5G usage data of the target area after T' of the fifth intermediate prediction from the predicted combined network usage data of the target area after T' of the fourth intermediate prediction to generate the sixth intermediate prediction.

The third forecasting process further comprises generating the third 5G usage data prediction by, using the third model (model 6), predicting 5G usage data of the target area after time T' based on the predicted non-network data of the first intermediate prediction and the predicted non-5G network usage data of the sixth intermediate prediction.

In other words, the third forecasting process comprises

- using the first model (model 5) which has been trained using data of the target geographical area, generating a first intermediate prediction by predicting non-network data of the target geographical area of the future time period based on the non-network data of the target geographical area of the past time period,
- using the fifth model (model 2) which has been trained using data of the reference geographical area, generating a fourth intermediate prediction by predicting combined network usage data of the target geographical area of the future time period based on the non-network data of the target geographical area of the past time period,
- using the sixth model (model 1) which has been trained using data of the reference geographical area, generating a fifth intermediate prediction by predicting 5G usage data of the target geographical area of the future time period based on the non-network data of the target geographical area of the past time period and the non-5G network usage data of the target geographical area of the past time period,
- subtracting the predicted 5G usage data of the fifth intermediate prediction from the combined network usage data of the fourth intermediate prediction to generate a sixth intermediate prediction comprising predicted non-5G network usage data of the target geographical area of the future time period, and
- generating the third 5G usage data prediction by, using the third model (model 6), predicting 5G usage data of the target geographical area of the future time period based on the predicted non-network data of the first intermediate prediction and the predicted non-5G network usage data of the sixth intermediate prediction.

A forecasting process may comprise generating any (at least one) of the first to third 5G usage data predictions, i.e. may comprises any (at least one) of the first to third forecasting processes. The first intermediate prediction may be generated only once in a forecasting process rather than being generated multiple times.

A forecasting process may comprise performing at least two of the first to third forecasting processes and combining the 5G usage data predictions to generate a final 5G forecast. The final 5G forecast may comprise an average of the at least two 5G usage data predictions or a predicted range of 5G usage data.

For example, considering a forecasting process in which two of the first to third forecasting processes are performed, a predicted range of 5G usage data may comprise, for each variable in the forecast, for each time step, a range for the variable comprising as endpoints the value for that variable in that time step of the two 5G usage data predictions.

A forecasting process may comprise the first to third forecasting processes. A predicted range of 5G usage data may comprise, for each variable in the forecast, for each time step, a range for the variable comprising as endpoints the highest and lowest values for that variable in that time step among the first to third 5G usage data predictions.

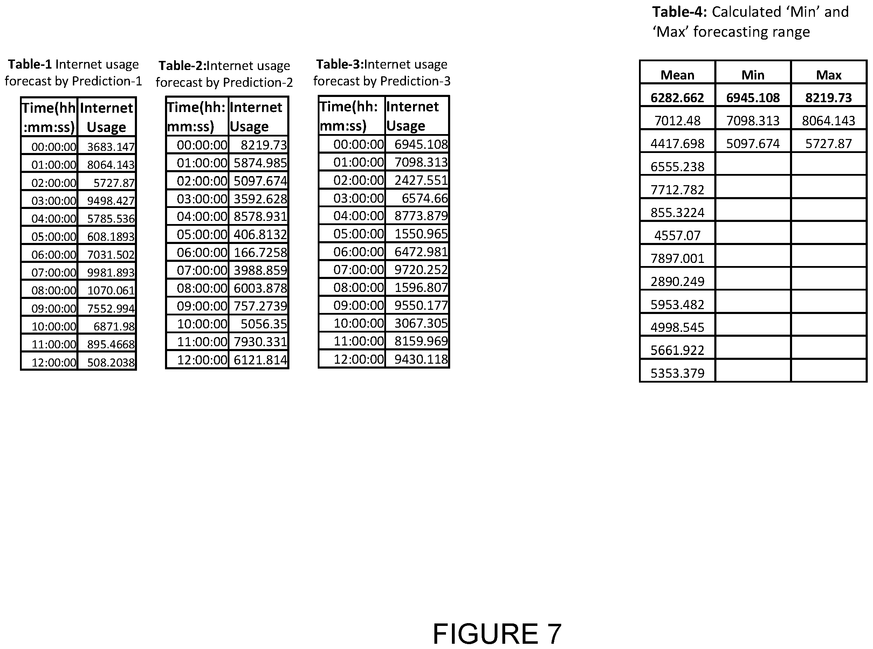

For a forecasting process comprising the first to third forecasting processes a predicted range of 5G usage data may be computed as follows. Figure 7 is a diagram useful for understanding how a predicted range of 5G usage data may be computed. For each variable, a mean value is calculated at each time step (i.e. the mean of the values of that variable at that time step from the first to third forecasting processes). Then the two values among the first to third values (corresponding to the first to third forecasting processes) for the variable at that time step which are closest to the mean value are selected as endpoints for the predicted range. The process may be carried out for each time step, and for each variable, to generate a predicted range of 5G usage data for each variable as time series data. Figure 7 illustrates tables 1-3 comprising first to third predicted 5G usage data, respectively. Specifically, the values for the variable "internet usage" are shown. Table 4 comprises a row for each time step. For a given time step table 4 comprises: on the left column the mean of the first to third values, in the middle column the smaller of the two values closest to the mean among the first to third values, and in the right column the larger of the two values closest to the mean among the first to third values. The predicted range for each time step is the range defined by the "min" and "max" values - i.e. the values of the middle and right columns. Not all of table 4 is completed.

In other words, in an implementation example, combining the first to third forecasts comprises for at least one (or each, or the) variable: computing the mean of the variable's predicted values (at each time step) in the first to third 5G usage data predictions; and selecting two values among the variable's predicted values (at each time step) which are closest to the corresponding mean as endpoints of a predicted range for the variable.

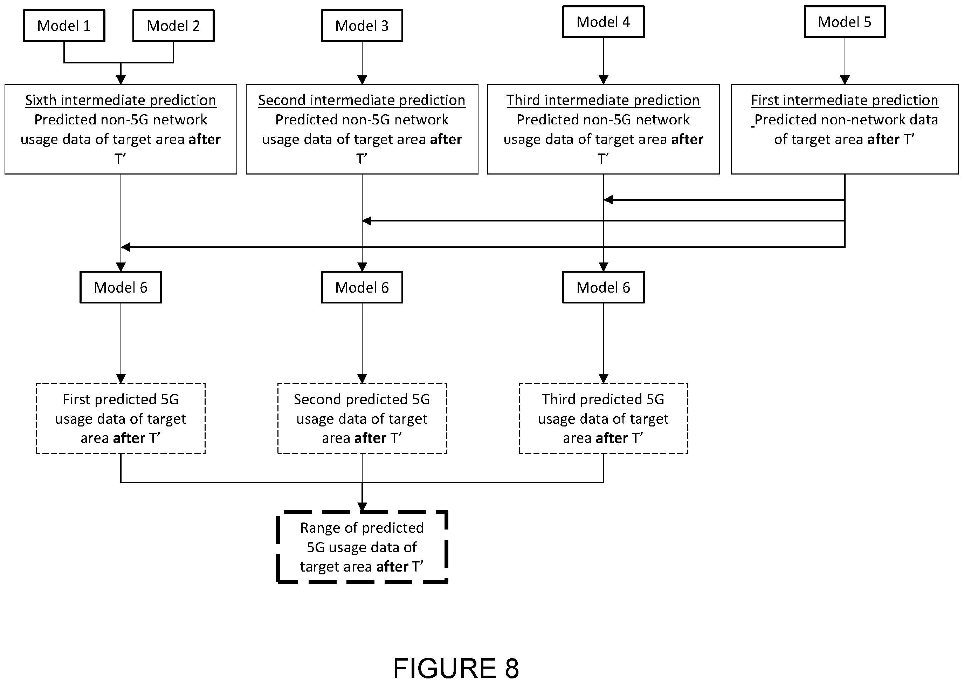

Figure 8 is a diagram representing a forecasting process comprising the first to third forecasting processes. In accordance with the first to third forecasting processes described above and as shown in Figure 8, this forecasting process comprises using models 1 and 2 to generate the sixth intermediate prediction (predicted non-5G network usage data of target area after T'), using model 3 to generate the second intermediate prediction (predicted non-5G network usage data of target area after T'), using model 4 to generate the third intermediate prediction (predicted non-5G network usage data of target area after T'), using model 5 to generate the first intermediate prediction (predicted non-network data of target area after T'), using model 6 to generate the first to third 5G usage data predictions based on the sixth and first intermediate predictions, the second and first intermediate predictions, and the third and first intermediate predictions, respectively, and generating the range of predicted 5G usage data based on the first to third 5G usage data predictions.

Aspects disclosed herein include methods which comprise a training process and/or a forecasting process - the training process in such a method may comprise training only the models which are used in the subsequent forecasting process (if included).

In testing, the forecasting process comprising the first to third forecasting processes and the combination thereof as described with reference to Figure 7 achieved 20% better accuracy than the first forecasting process alone, 35% better accuracy than the second forecasting process alone, and 40% better accuracy than the third forecasting process alone.

The training and/or forecasting processes disclosed herein may comprise collecting at least some of the training and/or input data (any of non-network or network data). Traffic data may comprise data obtained from sensors in a geographical area concerned. The sensors may comprise any of: at least one on-board vehicle sensor; at least one user equipment; at least one camera; and at least one speed sensor. Weather data may comprise data obtained from sensors in a geographical area concerned.

The first time period may be, for example, a number of months (e.g. 1, 6, or others) or weeks or years, etc. The second time period may be, for example, a number of months (e.g. 1, 6, or others) or weeks or years, etc. The past time period may comprise the first and second time periods, for example in a method comprising a training process followed by a forecasting process using the trained models. The time T' may be the present or close to the present, or may be in the past. Although the first and second time periods have been described above as directly following each other this is not necessary - that is, instead of "before time T" and "after time T", the time periods "before time T1" and "after time T2" may be employed, such that there is a time period between the first and second time periods. Corresponding considerations may apply to the past and future time periods.

Training processes may comprise using data from multiple target areas and/or multiple reference areas. Forecasting processes may comprise forecasting 5G data usage for multiple target areas. Forecasting processes may comprise forecasting 5G data usage for one or more or all of the target areas used in the training process used to train the models used in the forecasting process.

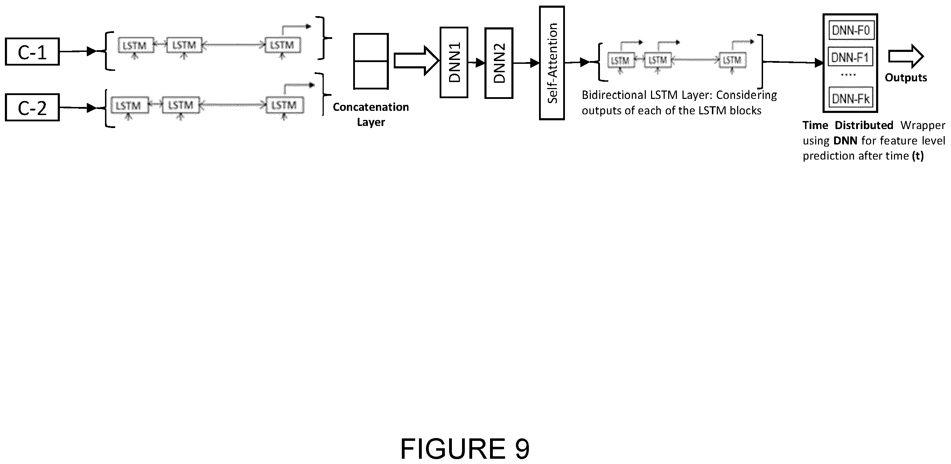

Figure 9 is a diagram illustrating an architecture of models 1, 3, 4, and 6 in an example implementation. The architecture comprises a pair of first bidirectional long short-term memory, BiLSTM, layers (to receive data on which the prediction concerned is based), a concatenation layer, at least one deep neural network (DNN) - in this case two (DNN1 and DNN2) - a self-attention network, a second BiLSTM layer, and a second at least one DNN (to output predicted data). The pair of first BiLSTM layers receive the input data. There are a pair of BiLSTM layers because models 1, 3, 4, and 6 are each configured to operate based on two sets of input data (for example, model 1 is configured to receive non-network data of the reference area before T as a first set of data and non-5G network usage data of the reference area before T as a second set of data. The inputs "C-1" and "C-2" represent the two sets of input data in Figure 9.

The first BiLSTM layers may be considered to learn (long-term) dependencies between time steps in each set of the input data which is time series data. Each layer performs additive interactions, which can help improve gradient flow over long sequences during training. Each layer comprises a number of BiLSTM blocks. The function of a BiLSTM Layer may be defined as follows:

$$h\_t = LSTM\_forward(x\_t, h\_\{t\text{-}1\})$$

$$g\_t = LSTM\_backward(x\_t, g\_\{t+1\})$$

$$y\_t = f(concatenate(h\_t, g\_t))$$

Here:

x_t represents the input at time step t.
h_t represents the hidden state of the forward LSTM at time step t.
g_t represents the hidden state of the backward LSTM at time step t.
h_{t-1} represents the hidden state of the forward LSTM at the previous time step t-1.
g_{t+1} represents the hidden state of the backward LSTM at the next time step t+1.

LSTM_forward and LSTM_backward denote the LSTM functions for forward and backward directions, respectively, 'concatenate' is the operation that concatenates the outputs of the forward and backward LSTMs. 'f is the activation function that transforms the concatenated output into the final output y_t.

The bidirectional LSTM processes the input sequence x_t from left to right with the forward LSTM and from right to left with the backward LSTM. The final output y_t is going to the next layer.

The concatenation layer takes inputs (the outputs from the first BiLSTM layers) and concatenates them along a specified dimension. That is, the concatenation layer concatenates the first BiLSTM layer outputs (based on two sets of input data) to generate a concatenation which has a dimension appropriate for the next stage.

The first DNNs learn relations and correlations in the data and add nonlinearity in the data. The function of a DNN may be defined as follows:

A DNN (Deep Neural Network) layer refers to a layer within a deep neural network architecture. A typical DNN layer can be mathematically represented as follows:

$$y = f(Wx + b)$$

Here:

x represents the input to the layer, which could be the output of the previous layer or the input data itself.
W represents the weight matrix, which contains the learnable parameters of the layer that determine the strength of connections between neurons.
b represents the bias vector, which provides an offset to the weighted sum of inputs.
f is the activation function that introduces non-linearity to the layer's output. Common activation functions include ReLU (Rectified Linear Unit), sigmoid, or tanh.

The DNN layer takes the input x, performs a linear transformation by multiplying it with the weight matrix W, and adds the bias vector b. The resulting weighted sum is then passed through the activation function f to compute the output y of the layer. This output is passed to the next layer.

The self-attention layer focuses on "important" parts of the data based on correlations computed between parts of the input data. The self-attention mechanism allows the model to focus on different parts of the input sequence based on their relevance to each other. By attending to the relevant context, the model can better capture long-range dependencies and improve its ability to generate accurate predictions or representations.

The second BiLSTM layer learns dependencies in the modified data output from the self-attention layer. The output of each of the BiLSTM blocks of the second BiLSTM layer is taken as the output of the second BiLSTM layer.

The second DNNs make predictions based on the outputs of the second BiLSTM layer. The second DNNs are implemented with a time-distributed wrapper to extract the predictions at the relevant time and at the relevant time steps. The time-distributed wrapper works as follows:

A time-distributed dense layer is used as the time-distributed wrapper. The time-distributed dense layer is particularly useful when dealing with variable-length sequences or when applying a dense layer to each time step of a sequence individually. Mathematically, the time-distributed dense layer can be represented as follows:

Input shape: (batch_size, time_steps, input_dim)
Apply time-distributed dense layer:
output = TimeDistributed(Dense(units))(input)
Output shape: (batch_size, time_steps, units)

Here, batch_size represents the number of sequences in the batch, time_steps is the length of each sequence, input dim is the dimensionality of the input at each time step, and units is the number of units or neurons in the dense layer.

The time-distributed dense layer reshapes the input tensor to (batch_size * time_steps, input dim), applies a standard dense layer with unit neurons, and then reshapes the output back to (batch_size, time_steps, units).

By using a time-distributed dense layer, the network can learn different weights for each time step, enabling it to capture temporal patterns and dependencies within the sequence. This is especially beneficial when the relationship between the inputs and outputs varies across different time steps.

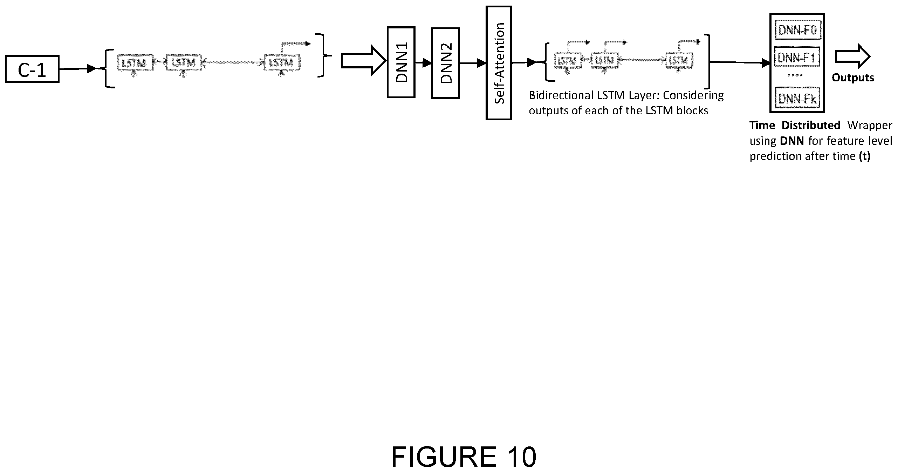

Figure 10 is a diagram illustrating an architecture of model 5 in an example implementation. The architecture comprises a first bidirectional long short-term memory, BiLSTM, layer (to receive data on which the prediction concerned is based), at least one DNN and in this case two deep neural networks, DNNs, (DNN1 and DNN 2), a self-attention network, a second BiLSTM layer, and a second at least one DNN (to output predicted data). The first BiLSTM layer receives the input data. Only one first BiLSTM layer is included in the architecture for model 5 because model 5 is configured to receive one set of input data. The input "C-1" represents the set of input data in Figure 10. The stages of the architecture operate in a similar manner to that described above with reference to Figure 9 and duplicate description is omitted. The main differences between the Figure 10 architecture and the Figure 9 architecture are that in Figure 10 there is only one first BiLSTM layer and thus no concatenation layer.

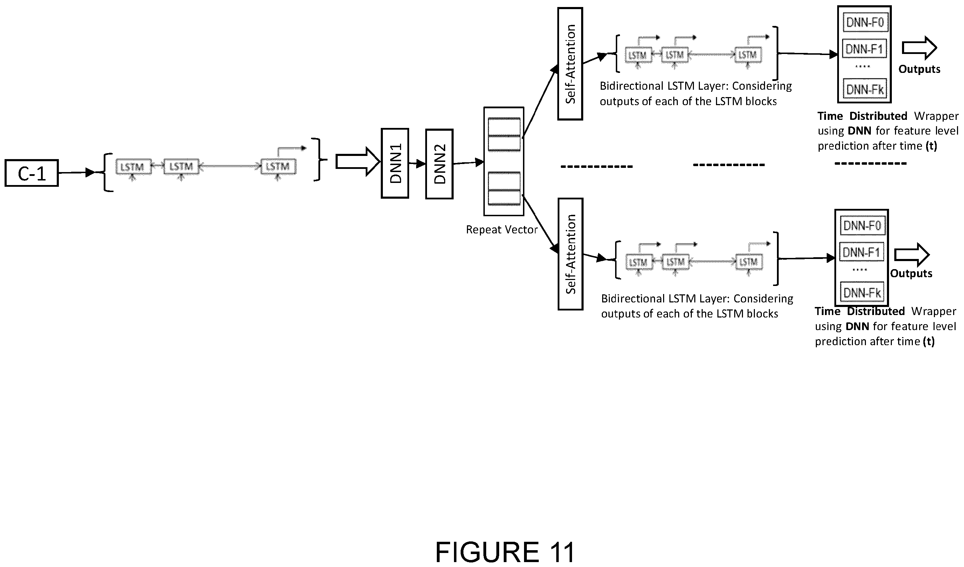

Figure 11 is a diagram illustrating an architecture of model 2 in an example implementation. The architecture comprises a first bidirectional long short-term memory, BiLSTM, layer (to receive data on which the prediction concerned is based), at least one DNN and in this case two deep neural networks, DNNs, (DNN1 and DNN 2), a repeat vector layer, a pair of self-attention networks, a pair of second BiLSTM layers, and a pair of second at least one DNNs (to output predicted data). The first BiLSTM layer receives the input data. Only one first BiLSTM layer is included in the architecture for model 2 because model 2 is configured to receive one set of input data. The input "C-1" represents the set of input data in Figure 22.

The repeat vector layer duplicates the output of the first DNN(s) so that two branches of processing are carried out. Each branch comprises a self-attention network/layer, a second BiLSTM layer, and a second at least one DNN. The architecture comprises two branches of processing because model 2 is configured to output two predicted sets of data. Of course, the two predicted sets of data may be considered combined so that the model is configured ultimately to output one predicted set of data (combined network usage).

The stages of the architecture operate in a similar manner to that described above with reference to Figure 9 and duplicate description is omitted. The main differences between the Figure 11 architecture and the Figure 9 architecture are that in Figure 11 there is only one first BiLSTM layer and thus no concatenation layer, and the Figure 11 architecture includes a repeat vector layer and two parallel branches of the subsequent stages.

The architectures described above are not essential and it will be appreciated that variations of the architectures may be used.

It may be said that the first to sixth models are encoder-decoder (network) models, and/or that the first to sixth models each comprises a deep neural network, DNN and/or that the first to sixth models are self-attention-based models and/or that the first to sixth models are self-attention-based encoder-decoder (network) models and/or that the first to sixth models each comprises a self-attention network and/or that the first to sixth models each comprises a BiLSTM layer. It may be said that the first to sixth models each comprises a first BiLSTM layer, a first at least one deep neural network, DNN, a self-attention network, a second BiLSTM layer, and a second at least one DNN.

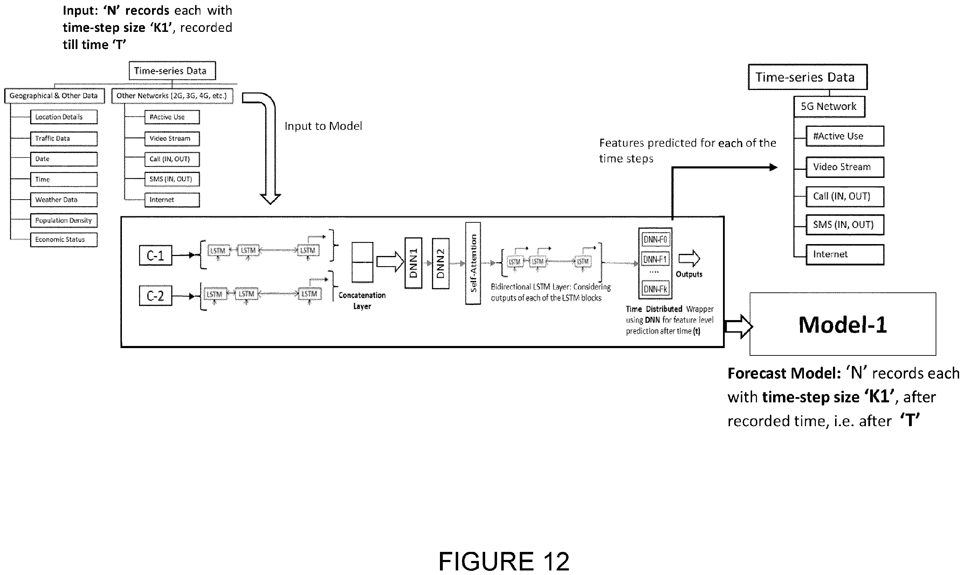

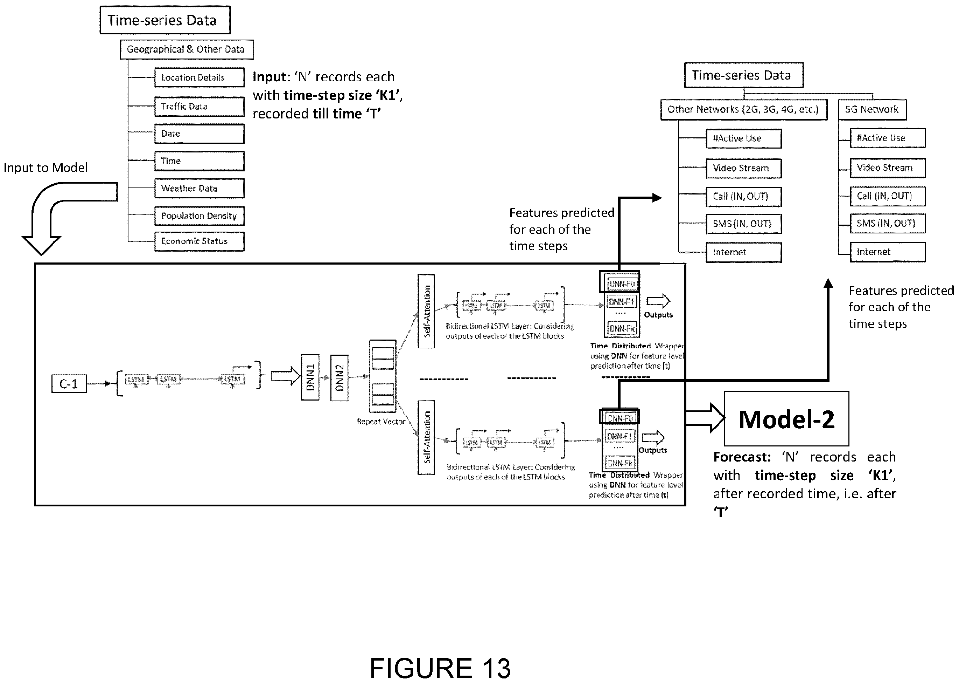

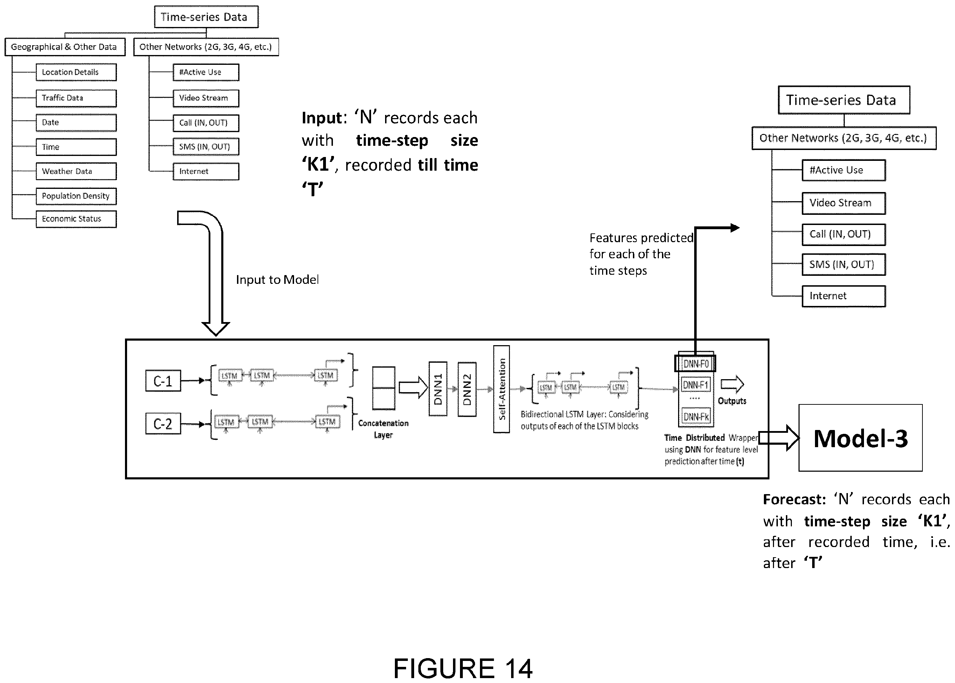

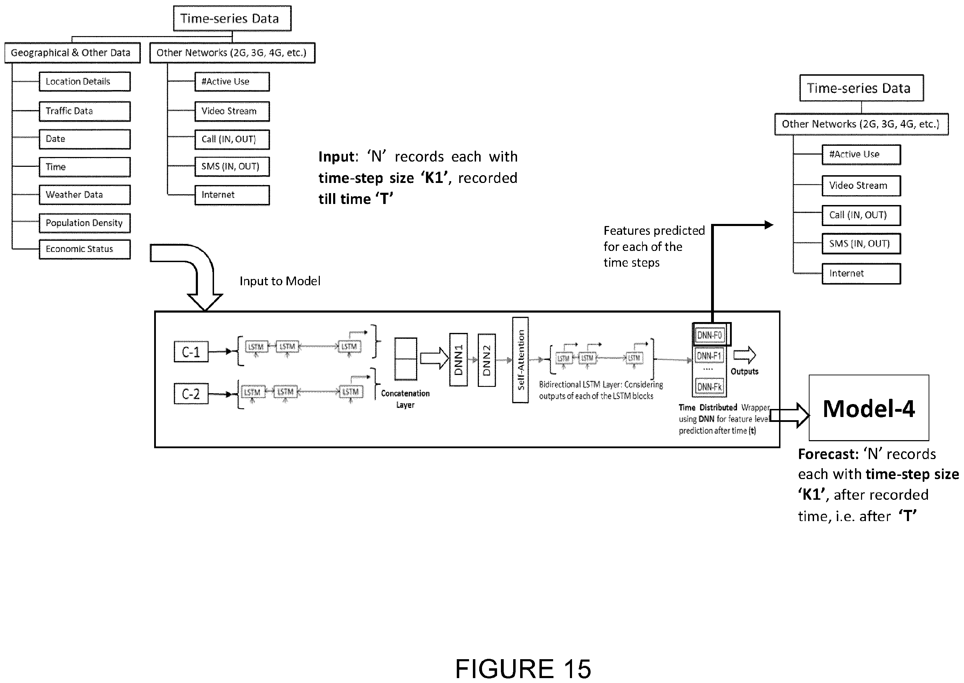

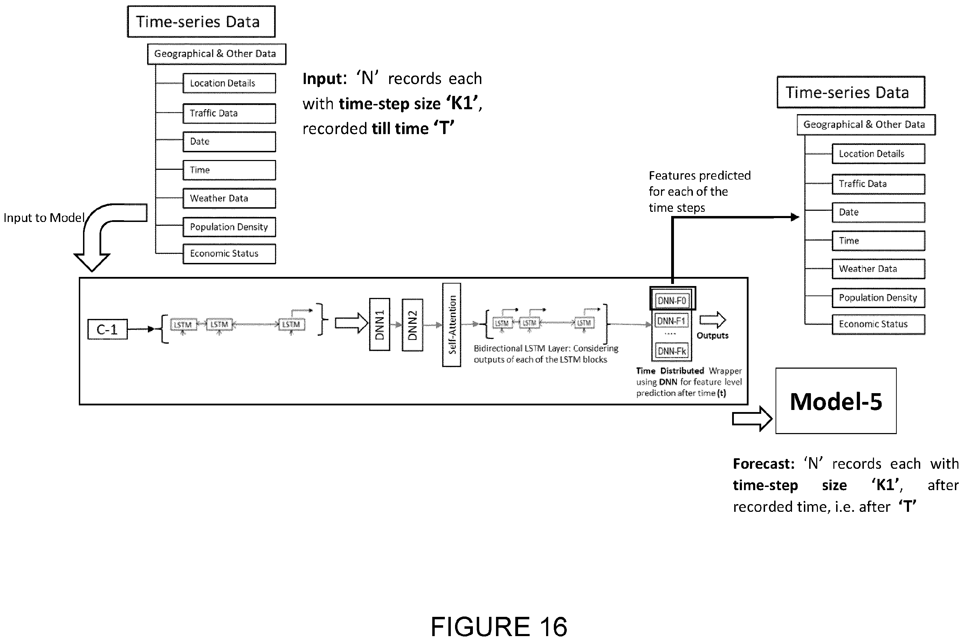

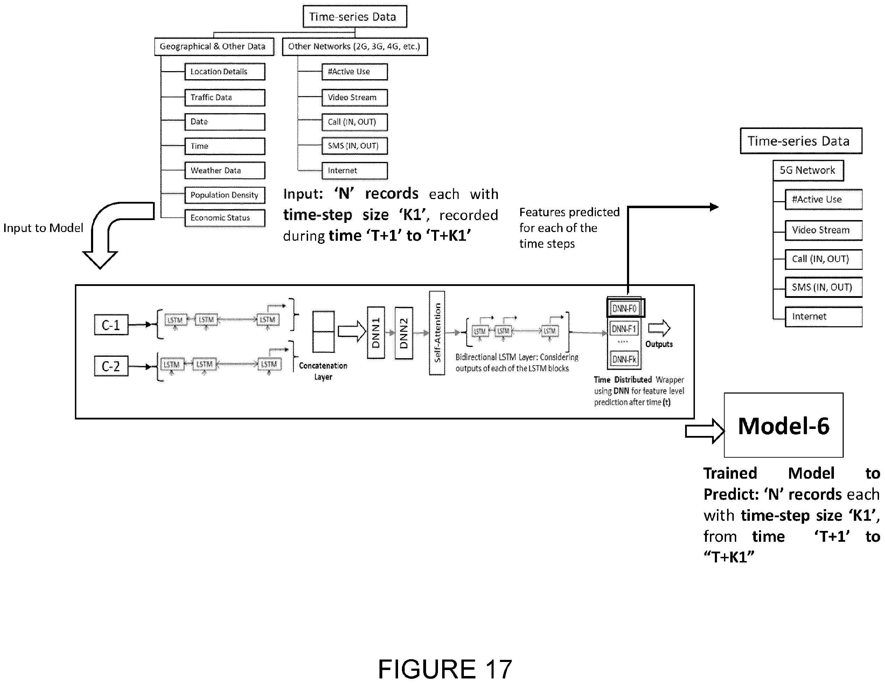

Figures 12-17 are diagrams corresponding to models 1-6, respectively, and illustrating the architectures of the example implementations as used for each model and example data that is input to and output from the model. The input and output data each comprise N records and the same time steps, which is not essential. That is, the input and output data may have a different number of records and/or time step to each other, and this may also vary across models.

In a forecasting process any number of variables may be forecasted and not all of the variables in the input data need to be forecasted.

The training and forecasting processes may in some aspects be considered to be divided into stages 1, 2, and 3.

Stage 1 comprises training models 1-6. That is, letting "A" represent non-network data, "B" non-5G network usage data, and "C" 5G usage data, stage 1 comprises, for the at least one reference area:

- Case-1: Using correlation between 'A' and 'B' and spatio-temporal relation up to time 'T' to forecast 'C' from time 'T'+1 to time 'T'+'K' (where 'K'>1) (Model-1)
- Case-2: Using 'A' and spatio-temporal relation up to time 'T' to forecast 'B' and 'C' from time 'T'+1 to time 'T'+'K' (where 'K'>1) (Model-2)
- Case-3: Using correlation between 'A' and 'B' and spatio-temporal relation up to time 'T' to forecast 'B' from time 'T'+1 to time 'T'+'K' (where 'K'>1) (Model-3)
- Case-4: Using correlation between 'A' and 'B' and spatio-temporal relation for time 'T'+1 to 'T'+'K' to Predict 'C' for time 'T'+1 to 'T'+'K' (where 'K'>1) (Model-6).

Stage 1 comprises, for the at least one target area:

- Case-5: Using correlation between 'A' and 'B' and spatio-temporal relation up to time 'T' to forecast 'B' from time 'T'+1 to time 'T'+'K' (where 'K'>1) (Model-4)
- Case-6: Using Time series data 'A' up to time 'T' to forecast 'A' from time 'T'+1 to time 'T'+'K' (where 'K'>1) (Model-5)

Stage 2 comprises generating the intermediate predictions. That is, stage 2 comprises, using data of the target area(s):

- Case-A: Forecast of 'A' from time T'+1 to T'+K using model trained in 'Case-6' (first intermediate prediction)
- Case-B: Forecast of 'B' from time T'+1 to T'+K using model trained in 'Case-3' (second intermediate prediction)
- Case-C: Forecast of 'B' from time T'+1 to T'+K using model trained in 'Case-5' (third intermediate prediction)
- Case-D: This case takes the difference in two forecasts Forecast (i.e., obtained using models trained in Case-1, and Case-2) to get the forecast of 'B' from time T'+1 to T'+K (sixth intermediate prediction)

Stage 3 comprises generating the first to third 5G usage data predictions and the predicted range. Stage 3 comprises:

- Prediction-1: Use the outcomes of 'Case-A' and 'Case-B' and prediction model trained in 'Case-4' to predict the usage of 'C' from time T'+1 to T'+K.

- Prediction-2: Use the outcomes of 'Case-A' and 'Case-C' and prediction model trained in 'Case-4' to predict the usage of 'C' from time T'+1 to T'+K.

- Prediction-3: Use the outcomes of 'Case-A' and 'Case-D' and prediction model trained in 'Case-4' to predict the usage of 'C' from time T'+1 to T'+K.

- Final Prediction: Use the minimum and maximum values (or those closest to the mean) of predicted values of usage of 'C' from time T'+1 to T'+K as final cold start forecast.

The methodology according to some aspects disclosed herein may be described as follows:

1. Input data of type-1 (reference area) is collected from cities having 5G connection with the presence of other Non 5G connections (like - 2G, 3G, 4G, LTE and so on) and other geographical information, weather information, bus, train, air transportation status, and traffic details etc.
2. Input data of type-2 (target area) is collected from cities not having 5G connection but having Non-5G connection (like - 2G, 3G, 4G, and LTE etc.) and other geographical information, weather information, bus, train, air transportation status, and traffic details etc.

3. Distant Supervision based pattern extraction for timeseries prediction. Use the following six ways to collect different types of time series pattern relations.

a. Use encoder-decoder network with data of Type-1, to learn the relation between (a) "Geographical & Other Data + Non-5G usage data (i.e., Other networks - 2G, 3G, 4G, and LTE etc.)" and (b) 5G usage data, to predict "b" (5G usage) by using "a". After training, the trained model is saved as "Model-1".

b. Use encoder-decoder network with data of Type-1, to learn the relation between (a) "Geographical & Other Data" and (b) "5G usage data + Non-5G usage data (i.e., Other networks - 2G, 3G, 4G, and LTE etc.)", to predict "b" (5G usage) by using "a". After training, the trained model is saved as "Model-2".

c. Use encoder-decoder network with data of Type-1, to learn the relation between (a) "Geographical & Other Data + Non-5G usage data (i.e., Other networks - 2G, 3G, 4G, and LTE etc.)" and (b) "next timeseries Non-5G usage data (i.e., Other networks - 2G, 3G, 4G, and LTE etc.)", to predict "b" (Non-5G usage) by using "a". After training, the trained model is saved as "Model-3".

d. Use encoder-decoder network with data of Type-2, to learn the relation between (a) "Geographical & Other Data + Non-5G usage data (i.e., Other networks - 2G, 3G, 4G, and LTE etc.)" and (b) "next timeseries Non-5G usage data (i.e., Other networks - 2G, 3G, 4G, and LTE etc.)", to predict "b" (Non-5G usage) by using "a". After training, the trained model is saved as "Model-4".

e. Use encoder-decoder network with data of Type-2, to learn the relation between (a) "Geographical & Other Data" and (b) "next timeseries Non-5G usage data (i.e., Other networks - 2G, 3G, 4G, and LTE etc.)", to predict "b" by using "a". After training, the trained model is saved as "Model-5".

f. Use encoder-decoder network with data of Type-1, to learn the relation between (a) "Geographical & Other Data + Non-5G usage data (i.e., Other networks - 2G, 3G, 4G, and LTE etc.)" and (b) "next timeseries 5G usage data (i.e., Other networks - 2G, 3G, 4G, and LTE etc.)", to predict "b" by using "a". After training, the trained model is saved as "Model-6".

4. The next stage is to use the learned time series pattern relations for the cold start forecasting. This is the 5G data usage forecasting for the areas of Non-5G cities (i.e., cities, where the 5G Network is not available).

5. Use the Time-Series data history from NON-5G Service area and pass it to models trained on (a) time-series data, which belongs to 5G service area and on (b) time-series data, which belongs to Non-5G service area. This gives the timeseries prediction for Non-5G data according to the trend of a city having 5G Service and timeseries prediction for Non-5G data according to the trend of a city having NO 5G Service. The predicted data contains very useful relations.

6. Use "Model-6", to predict the timeseries geographical data for "Non-5G service area". Use the forecasted data for Non-5G data usage (as discussed above) and concatenate it with the timeseries geographical data for "Non-5G service area". For all combinations, use "Model-6" to predict the 5G data usage for Non-5G service areas. Finally, identify the minimum and maximum 5G data usage by the models as a range of 5G data usage prediction for "Non-5G service area".

Aspects disclosed herein may be considered to make use of multi-variate time series forecasting. In general, multi-variate time series forecasting may be explained as follows.

Assumption - Assume complex relations between multiple time-series.

To emphasize the relationships among multiple time-series, the problem of multivariate time-series forecasting may be formulated based on a data structure called multivariate temporal graph (which may be selected as a case of non-Euclidean learning), which can be denoted as G=(X,W), where $X = \{x\_it\} \in \mathbb{R}^{N \times T}$ stands for the multivariate time-series input, where N is the number of time-series (nodes), and T is the number of timestamps. The observed values at timestamp t are denoted as $X\_t \in \mathbb{R}^N$. $W \in \mathbb{R}^{N \times N}$ is the adjacency matrix, where $w_{ij} > 0$ indicates that there is an edge connecting nodes $i$ and $j$, and $w_{ij}$ indicates the strength of this edge. Problem Definition: Given observed values of previous K timestamps $X_{t-k}, \ldots, X_{t-1}$ the task of multivariate timeseries forecasting aims to predict the node values in a multivariate temporal graph $G = (X, W)$ for the next H timestamps, denoted by $X_{\hat{t}}, X_{\hat{t}+k}, \ldots, X_{\hat{t}+H-1}$. These values may be inferred by the forecasting model M with parameter $\varphi$ and a graph structure G, where G can be input as prior or automatically inferred from data. Thus:

$$X\hat{}_t, X\hat{}_{t+1}, \ldots, X\hat{}_{t+H-1} = F(X_{t-F}, \ldots, X_{t-1}; G; \varphi)$$

The technique of distant supervision may be understood as follows. Traditionally, most machine learning techniques require training data. A common approach for collecting training data is to have humans label data. For example, for a marriage relation (e.g. if a model is being trained to extract said relation), human annotators may label the pair "David Beckham" and "Victoria Beckham" as a positive training example. This approach is expensive and even if the data corpus is large this approach will not generate sufficient data for some ML algorithms. Furthermore, the resulting training data may be noisy due to human error.

According to an alternative approach to generating training data which may be referred to as "Distant Supervision", use is made of an already existing database to collect examples for the relation to be extracted and these examples are used to automatically generate training data. For example, considering a scenario in which a database which contains the fact that Barack Obama and Michelle Obama are married, accordingly each pair of "Barack Obama" and "Michelle Obama" that appear in the same sentence in any dataset which is used in training the ML model is labelled as a positive example for the marriage relation. Thus a large amount of (possibly noisy) training data may be generated. Applying distant supervision to get positive training examples may be considered relatively straightforward, but generating negative examples more difficult.

The aspects disclosed herein may be considered to apply a distant supervision technique in the sense that they learn multiple significant relationships from diverse source data, which can be instrumental in forecasting the demand for 5G data usage in target areas (having no 5G infrastructure and no 5G usage history) with different distributions. These learned relationships encompass various aspects, including but not limited to:

(a) The correlation between geographical features, non-5G data usage, and 5G data usage, elucidating how these factors mutually influence each other.
(b) The impact of geographical data on the demand for 5G usage, providing insights into how geographical factors shape the demand patterns.
(c) The influence of geographical data on the demand for non-5G usage, highlighting the connection between geographical factors and non-5G data consumption.
(d) The effect of the presence of non-5G networks on 5G data usage, indicating how the availability of non-5G infrastructure affects the utilization of 5G data.
(e) The relationship between changes in geographical features and the overall usage requirements for both 5G and non-5G data, demonstrating how alterations in geographical characteristics impact the demand for data services.
(f) Other correlations between the features of geographical data, non-5G data usage, and 5G data usage, capturing additional interconnected patterns among these variables.

By integrating these relationship patterns and correlations with changes in geographical infrastructure and non-5G usage, a clearer understanding is obtained of the anticipated demand for 5G data usage in the near future in target areas where 5G infrastructure and usage history are absent.

Aspects disclosed herein may also be applied in other domains, such as e-commerce to forecast sales of a new product (for example, a product for which there is no data available about a similar previous product). That is, aspects may use distant supervision to learn the distant time-series patterns from different ecommerce providers on sale of different products (& user base etc.), and use the distantly learned time series patterns to do the time-series forecast on a new product on different ecommerce platform.

Aspects disclosed herein may comprise distant supervision-based cold start, multi-step, multi-variate, and spatiotemporal time series forecasting. The distant supervision is used to learn the distant patterns for time series forecasting from different distributions. Systems use the distantly learned patterns for cold start forecasting for a different distribution's time series data.

Aspects disclosed herein include aspects for cold-start spatiotemporal, multi-variate, and Multi-Step time series forecasting. According to an aspect, a system gives direct forecast values and range of minimum and maximum values as forecast (where for each of the variables, and for each of the time steps, the minimum and maximum values are indicated). The source dataset (i.e., used to train the time-series forecasting system) and the target dataset (i.e., used for time-series forecasting) may belong to different distributions. Due to different distributions, the common/useful patterns cannot be obtained beforehand using traditional strategies. The concept of distant supervision may be applied to distantly learn useful patterns (useful for time series forecasting). Thus, the system may be considered to present a scenario of true cold-start forecasting.

In other words, constraints in the scenarios considered herein show that the training data belongs to multiple different distributions, for the areas having 5G service, while the test data belongs to different distributions (having no 5G service). The distant-supervision-based strategies are used to indirectly learn the patterns from different distributions so that they may be used in forecasting time series for 5G in different distributions. The system uses distantly learned patterns to forecast the 5G requirements at cell-level (cell is a grid-type structure, used by mobile companies - it divides the entire geographical area into small sub-areas, to effectively manage the network).

As mentioned above, previous methods include the first and second comparative methods. Such methods do the cold-start forecasting for either the sale of new products (in a previously defined domain, or in any new domain) or weather updates in new areas, etc. But such methods use a common distribution for all such forecasting. Due to this arrangement, all such sale forecasting methods get the benefits of trends of sales, user behavior, etc. Similarly, for weather forecasting, such systems use a lot of common features (i.e., common to both the existing area and the cold start area), other weather-related ground realities, and information, etc. Such approaches will not work if different time series data distributions are used to train and test the time series data (to achieve the cold-start forecasting). In the proposed scenario (5G forecasting for an area without 5G usage data (historical)), there are no (useful) dependencies among features, common metadata, and common background information.

Aspects disclosed herein may comprise using distant supervision to identify useful patterns from different data distributions (i.e., source training datasets belonging to a different domain, and target test dataset belonging to a different domain, with minimum feature overlap) for cold-start Multi-step, Multi-variate, and spatiotemporal time series forecasting. Some aspects disclosed herein are capable of cold-start, multi-step, multi-variate, and spatiotemporal time series forecasting for data related to new distribution. Some aspects disclosed herein can effectively predict the cold start time series data for areas having no history of that event and belonging to different distributions (different from the distribution used to train the system). The distant supervision-based approaches can be applied to a lot of different time series applications.

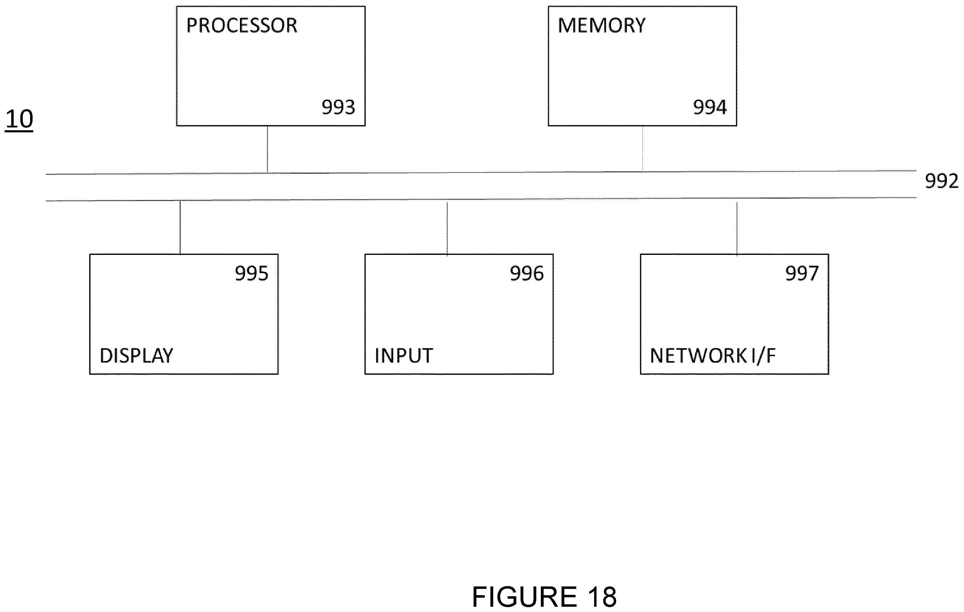

Figure 18 is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps or processes described above.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing any of the method steps or processes described above. Thus, the term "computer-readable storage medium" may also include any medium that is capable of storing, encoding or carrying a set of instructions for execution by the machine and that cause the machine to perform any of the method steps or processes described above. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps or processes described above. The memory 994 stores data being read and written by the processor 993 and may store training data and/or test data and/or network weights and/or intermediate predictions and/or predictions and/or values and/or other data, described above, and/or programs for executing any of the method steps or processes described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The display unit 995 may display a representation of data stored by the computing device, such as a representation of training data and/or predictions and/or GUI windows and/or interactive representations enabling a user to interact with the apparatus 10 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above.

The network interface (network I/F) 997 may be connected to a network, such as the Internet, and is connectable to other such computing devices via the network. The network I/F 997 may control data input/output from/to other apparatus via the network.

Other peripheral devices such as microphone, speakers, printer, power supply unit, fan, case, scanner, trackerball etc may be included in the computing device.

Methods/processes embodying the present invention may be carried out on a computing device/apparatus 10 such as that illustrated in Figure 18. Such a computing device need not have every component illustrated in Figure 18, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method/process embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

**Claims**

1.  A computer-implemented method comprising:

    performing a forecasting process to predict 5G usage data for a target geographical area to include generating at least one of first to third 5G usage data predictions for the target geographical area,
    wherein generating the first 5G usage data prediction comprises:

    using a first model, which has been trained using data of the target geographical area, to generate a first intermediate prediction by predicting non-network data of the target geographical area of a future time period based on non-network data of the target geographical area of a past time period;
    using a second model, which has been trained using data of at least one reference geographical area, to generate a second intermediate prediction by predicting non-5G network usage data of the target geographical area of the future time period based on the non-network data and non-5G network usage data of the target geographical area of the past time period; and
    using a third model, which has been trained using data of the at least one reference geographical area, to generate the first 5G usage data prediction by predicting 5G usage data of the target geographical area of the future time period based on the predicted non-network data of the first intermediate prediction and the predicted non-5G network usage data of the second intermediate prediction,

wherein generating the second 5G usage data prediction comprises:

using a fourth model, which has been trained using data of the target geographical area, to generate a third intermediate prediction by predicting non-5G network usage data of the target geographical area of the future time period based on the non-network data and the non-5G network usage data of the target geographical area of the past time period; and

using the third model to generate the second 5G usage data prediction by predicting 5G usage data of the target geographical area of the future time period based on the predicted non-network data of the first intermediate prediction and the predicted non-5G network usage data of the third intermediate prediction,

wherein generating the third 5G usage data prediction comprises:

using a fifth model, which has been trained using data of the at least one reference geographical area, to generate a fourth intermediate prediction by predicting combined network usage data of the target geographical area of the future time period based on the non-network data of the target geographical area of the past time period the combined network usage data comprising usage data relating to 5G and non-5G networks;

using a sixth model, which has been trained using data of the at least one reference geographical area, to generate a fifth intermediate prediction by predicting 5G usage data of the target geographical area of the future time period based on the non-network data and the non-5G network usage data of the target geographical area of the past time period;

subtracting the predicted 5G usage data of the fifth intermediate prediction from the combined network usage data of the fourth intermediate prediction to generate a sixth intermediate prediction comprising predicted non-5G network usage data of the target geographical area of the future time period; and

using the third model to generate the third 5G usage data prediction by predicting 5G usage data of the target geographical area of the future time period based on the predicted non-network data of the first intermediate prediction and the predicted non-5G network usage data of the sixth intermediate prediction,

wherein non-network data comprises any of location data, demographic data, weather data, infrastructure data, and traffic data.

2. The computer-implemented method as claimed in claim 1, wherein non-5G network usage data comprises usage data of at least one non-5G telecommunications network.

3. The computer-implemented method as claimed in claim 1 or claim 2, wherein the forecasting process comprises generating at least two of the first to third 5G usage data predictions and combining the at least two 5G usage data predictions to generate a final 5G forecast.

4. The computer-implemented method as claimed in any of the preceding claims, wherein the forecasting process comprises generating the first to third 5G usage data predictions and combining the first to third 5G usage data predictions to generate a final 5G forecast.

5. The computer-implemented method as claimed in claim 4, wherein combining the first to third 5G usage data predictions to generate a final 5G forecast comprises, for at least one variable:

computing the mean of the variable's predicted values in the first to third 5G usage data predictions; and selecting two values among the variable's predicted values which are closest to the mean as endpoints of a predicted range for the variable.

6. The computer-implemented method as claimed in any of the preceding claims, further comprising performing a training process before performing the forecasting process, the training process comprising training at least one of the first to sixth models.

7. The computer-implemented method as claimed in claim 6, wherein the training process comprises:

based on non-network data of the target geographical area of a first time period and non-network data of the target geographical area of a second time period before the first time period, training the first model to predict the non-network data of the target geographical area of the second time period based on the non-network data of the target geographical area of the first time period;

based on non-5G network usage data of the at least one reference geographical area of the second time period and based on non-network data and non-5G network usage data of the at least one reference geographical area of the first time period, training the second model to predict the non-5G network usage data of the at least one reference geographical area of the second time period based on the non-network data and the non-5G network usage data of the at least one reference geographical area of the first time period;

based on 5G usage data, non-network data, and the non-5G network usage data of the at least one reference geographical area of the second time period, training the third model to predict the 5G usage data of the at least one reference geographical area of the second time period based on the non-network data and the non-5G network usage data of the at least one reference geographical area of the second time period;

based on non-5G network usage data of the target geographical area of the second time period and based on the non-network data and non-5G network usage data of the target geographical area of the first time period, training the fourth model to predict the non-5G network usage data of the target geographical area of the second time period based on the non-network data and the non-5G network usage data of the target geographical area of the first time period;

based on combined network usage data of the at least one reference geographical area of the second time period and based on the non-network of the at least one reference geographical area of the first time period, training the fifth model to predict the combined network usage data of the at least one reference geographical area of the second time period based on the non-network data of the at least one reference geographical area of the first time period, wherein the combined network usage data comprises usage data relating to 5G and non-5G networks; and

based on the 5G usage data of the at least one reference geographical area of the second time period and based on the non-network data and the non-5G network usage data of the at least one reference geographical area of the first time period, training the sixth model to predict the 5G usage data of the at least one reference geographical area of the second time period based on the non-network data and the non-5G network usage data of the at least one reference geographical area of the first time period.

8.  The computer-implemented method as claimed in any of the preceding claims, wherein the first to sixth models comprise encoder-decoder models.

9.  The computer-implemented method as claimed in any of the preceding claims, wherein the first to sixth models each comprises a self-attention network.

10. The computer-implemented method as claimed in any of the preceding claims, wherein the first to sixth models each comprises a first long short-term memory, LSTM, layer, a first at least one deep neural network, DNN, a self-attention network, a second LSTM layer, and a second at least one DNN.

11. The computer-implemented method as claimed in any of the preceding claims, wherein non-network data comprises a population or population density of the area concerned and location data indicating the location and extent of the area concerned.

12. The computer-implemented method as claimed in any of the preceding claims, wherein 5G usage data, non-5G usage data, and combined network usage data each comprises values over time of at least one variable, the at least one variable comprising any of:

a number of active users;
a number and/or length of video streams and/or an amount of data/bandwidth used for video streaming;
a number and/or length of calls and/or an amount of data/bandwidth used for calls;
a number and/or size of SMS messages and/or an amount of data/bandwidth used for SMS messages; and
a usage amount of the internet and/or an amount of data/bandwidth used for internet-related processes and/or an amount of data/bandwidth exchanged via the internet.

13. The computer-implemented method as claimed in any of the preceding claims, wherein the predicted 5G usage data comprises predicted values over time of at least one variable, the at least one variable comprising any of:

a number of active users;
a number and/or length of video streams and/or an amount of data/bandwidth used for video streaming;
a number and/or length of calls and/or an amount of data/bandwidth used for calls;

a number and/or size of SMS messages and/or an amount of data/bandwidth used for SMS messages; and a usage amount of the internet and/or an amount of data/bandwidth used for internet-related processes and/or an amount of data/bandwidth exchanged via the internet.

14. A computer program which, when run on a computer, causes the computer to carry out a method comprising:

performing a forecasting process to predict 5G usage data for a target geographical area to include generating at least one of first to third 5G usage data predictions for the target geographical area, wherein generating the first 5G usage data prediction comprises:

using a first model, which has been trained using data of the target geographical area, to generate a first intermediate prediction by predicting non-network data of the target geographical area of a future time period based on non-network data of the target geographical area of a past time period; using a second model, which has been trained using data of at least one reference geographical area, to generate a second intermediate prediction by predicting non-5G network usage data of the target geographical area of the future time period based on the non-network data and non-5G network usage data of the target geographical area of the past time period; and using a third model, which has been trained using data of the at least one reference geographical area, to generate the first 5G usage data prediction by predicting 5G usage data of the target geographical area of the future time period based on the predicted non-network data of the first intermediate prediction and the predicted non-5G network usage data of the second intermediate prediction,

wherein generating the second 5G usage data prediction comprises:

using a fourth model, which has been trained using data of the target geographical area, to generate a third intermediate prediction by predicting non-5G network usage data of the target geographical area of the future time period based on the non-network data and the non-5G network usage data of the target geographical area of the past time period; and using the third model to generate the second 5G usage data prediction by predicting 5G usage data of the target geographical area of the future time period based on the predicted non-network data of the first intermediate prediction and the predicted non-5G network usage data of the third intermediate prediction,

wherein generating the third 5G usage data prediction comprises:

using a fifth model, which has been trained using data of the at least one reference geographical area, to generate a fourth intermediate prediction by predicting combined network usage data of the target geographical area of the future time period based on the non-network data of the target geographical area of the past time period the combined network usage data comprising usage data relating to 5G and non-5G networks; using a sixth model, which has been trained using data of the at least one reference geographical area, to generate a fifth intermediate prediction by predicting 5G usage data of the target geographical area of the future time period based on the non-network data and the non-5G network usage data of the target geographical area of the past time period; subtracting the predicted 5G usage data of the fifth intermediate prediction from the combined network usage data of the fourth intermediate prediction to generate a sixth intermediate prediction comprising predicted non-5G network usage data of the target geographical area of the future time period; and using the third model to generate the third 5G usage data prediction by predicting 5G usage data of the target geographical area of the future time period based on the predicted non-network data of the first intermediate prediction and the predicted non-5G network usage data of the sixth intermediate prediction,

wherein non-network data comprises any of location data, demographic data, weather data, infrastructure data, and traffic data.

15. An information processing apparatus comprising a memory and a processor connected to the memory, wherein the processor is configured to:

perform a forecasting process to predict 5G usage data for a target geographical area to include generating at least one of first to third 5G usage data predictions for the target geographical area,

wherein generating the first 5G usage data prediction comprises:

using a first model, which has been trained using data of the target geographical area, to generate a first intermediate prediction by predicting non-network data of the target geographical area of a future time period based on non-network data of the target geographical area of a past time period;

using a second model, which has been trained using data of at least one reference geographical area, to generate a second intermediate prediction by predicting non-5G network usage data of the target geographical area of the future time period based on the non-network data and non-5G network usage data of the target geographical area of the past time period; and

using a third model, which has been trained using data of the at least one reference geographical area, to generate the first 5G usage data prediction by predicting 5G usage data of the target geographical area of the future time period based on the predicted non-network data of the first intermediate prediction and the predicted non-5G network usage data of the second intermediate prediction,

wherein generating the second 5G usage data prediction comprises:

using a fourth model, which has been trained using data of the target geographical area, to generate a third intermediate prediction by predicting non-5G network usage data of the target geographical area of the future time period based on the non-network data and the non-5G network usage data of the target geographical area of the past time period; and

using the third model to generate the second 5G usage data prediction by predicting 5G usage data of the target geographical area of the future time period based on the predicted non-network data of the first intermediate prediction and the predicted non-5G network usage data of the third intermediate prediction,

wherein generating the third 5G usage data prediction comprises:

using a fifth model, which has been trained using data of the at least one reference geographical area, to generate a fourth intermediate prediction by predicting combined network usage data of the target geographical area of the future time period based on the non-network data of the target geographical area of the past time period the combined network usage data comprising usage data relating to 5G and non-5G networks;

using a sixth model, which has been trained using data of the at least one reference geographical area, to generate a fifth intermediate prediction by predicting 5G usage data of the target geographical area of the future time period based on the non-network data and the non-5G network usage data of the target geographical area of the past time period;

subtracting the predicted 5G usage data of the fifth intermediate prediction from the combined network usage data of the fourth intermediate prediction to generate a sixth intermediate prediction comprising predicted non-5G network usage data of the target geographical area of the future time period; and

using the third model to generate the third 5G usage data prediction by predicting 5G usage data of the target geographical area of the future time period based on the predicted non-network data of the first intermediate prediction and the predicted non-5G network usage data of the sixth intermediate prediction,

wherein non-network data comprises any of location data, demographic data, weather data, infrastructure data, and traffic data.

FIGURE 1

EP 4 503 694 A1

EP 4 503 694 A1

### Table-1. Other Network Data (2G, 3G, 4G, LTE)

| Cell ID | Date | Time | #Active User | Video Stream | Call IN | Call OUT | SMS IN | SMS OUT | Internet |
|---|---|---|---|---|---|---|---|---|---|
| 000001 | 01/01/22 | 00.00 | 1000 | 900GB | 400 | 500 | 100 | 200 | 500GB |
| 000001 | 01/01/22 | 00.30 | 700 | 900GB | 400 | 500 | 100 | 200 | 300GB |
| 000001 | 01/01/22 | 01.00 | 600 | 700GB | 400 | 400 | 100 | 200 | 300GB |
| 000001 | 01/01/22 | 01.30 | 500 | 700GB | 200 | 300 | 100 | 100 | 200GB |
| 000001 | 01/01/22 | 02.00 | 400 | 600GB | 300 | 200 | 70 | 100 | 200GB |
| 000001 | 01/01/22 | 02.30 | 300 | 600GB | 200 | 200 | 70 | 100 | 200GB |
| 000001 | 01/01/22 | 03.00 | 200 | 400GB | 100 | 200 | 50 | 50 | 100GB |
| 000001 | 01/01/22 | 03.30 | 200 | 400GB | 100 | 100 | 50 | 50 | 100GB |
| 000001 | 01/01/22 | 04.00 | 200 | 300GB | 50 | 100 | 50 | 50 | 100GB |
| 000001 | 01/01/22 | 04.30 | 200 | 300GB | 100 | 100 | 100 | 100 | 200GB |
| 000001 | 01/01/22 | 05.00 | 400 | 500GB | 200 | 200 | 400 | 200 | 300GB |
| ..... | ...... | ..... | ..... | ..... | ..... | ..... | ..... | ..... | ..... |
| ..... | ..... | ..... | ..... | ..... | ..... | ..... | ..... | ..... | ..... |

### Table-2. 5G Data

| Cell ID | Date | Time | #Active User | Video Stream | Call IN | Call OUT | SMS IN | SMS OUT | Internet |
|---|---|---|---|---|---|---|---|---|---|
| 000001 | 01/01/22 | 00.00 | 700 | 1000GB | 400 | 500 | 120 | 250 | 900GB |
| 000001 | 01/01/22 | 00.30 | 700 | 900GB | 400 | 500 | 120 | 220 | 900GB |
| 000001 | 01/01/22 | 01.00 | 500 | 900GB | 400 | 400 | 120 | 220 | 900GB |
| 000001 | 01/01/22 | 01.30 | 500 | 800GB | 200 | 300 | 100 | 150 | 800GB |
| 000001 | 01/01/22 | 02.00 | 400 | 600GB | 300 | 200 | 60 | 100 | 800GB |
| 000001 | 01/01/22 | 02.30 | 300 | 600GB | 200 | 200 | 70 | 100 | 600GB |
| 000001 | 01/01/22 | 03.00 | 300 | 500GB | 100 | 200 | 60 | 70 | 600GB |
| 000001 | 01/01/22 | 03.30 | 300 | 500GB | 100 | 100 | 50 | 70 | 500GB |
| 000001 | 01/01/22 | 04.00 | 300 | 400GB | 50 | 100 | 50 | 70 | 400GB |
| 000001 | 01/01/22 | 04.30 | 300 | 500GB | 100 | 100 | 90 | 130 | 600GB |
| 000001 | 01/01/22 | 05.00 | 400 | 700GB | 200 | 200 | 300 | 200 | 700GB |
| ..... | ..... | ..... | ..... | ..... | ..... | ..... | ..... | ..... | ..... |
| ..... | ..... | ..... | ..... | ..... | ..... | ..... | ..... | ..... | ..... |

### Table-3. Geographical and Other Data

| Cell ID | Date | Time | Population Density | #Bus lines | #Train Lines | #Tram Lines | Traffic Density | Distance from Airport | Airport Capacity | Rain (mm) | Temperature (F) |
|---|---|---|---|---|---|---|---|---|---|---|---|
| 000001 | 01/01/22 | 00.00 | 2000 | 2 | 1 | 1 | 500 | 30 | 1 | 0.00 | 66 |
| 000001 | 01/01/22 | 00.30 | 2000 | 2 | 1 | 1 | 500 | 30 | 1 | 0.00 | 64 |
| 000001 | 01/01/22 | 01.00 | 1500 | 2 | 1 | 1 | 300 | 30 | 1 | 0.00 | 50 |
| 000001 | 01/01/22 | 01.30 | 1500 | 2 | 1 | 1 | 300 | 30 | 1 | 0.01 | 50 |
| 000001 | 01/01/22 | 02.00 | 1500 | 2 | 1 | 1 | 300 | 30 | 1 | 0.02 | 56 |
| 000001 | 01/01/22 | 02.30 | 1500 | 2 | 1 | 1 | 200 | 30 | 1 | 0.00 | 56 |
| 000001 | 01/01/22 | 03.00 | 1500 | 2 | 1 | 1 | 200 | 30 | 1 | 0.04 | 55 |
| 000001 | 01/01/22 | 03.30 | 1500 | 2 | 1 | 1 | 200 | 30 | 1 | 0.04 | 54 |
| 000001 | 01/01/22 | 04.00 | 1500 | 2 | 1 | 1 | 300 | 30 | 1 | 0.03 | 54 |
| 000001 | 01/01/22 | 04.30 | 1700 | 2 | 1 | 1 | 300 | 30 | 1 | 0.00 | 56 |
| 000001 | 01/01/22 | 05.00 | 1700 | 2 | 1 | 1 | 400 | 30 | 1 | 0.00 | 56 |
| ..... | ..... | ..... | ..... | ..... | ..... | ..... | ..... | ..... | ..... | ..... | ..... |
| ..... | ..... | ..... | ..... | ..... | ..... | ..... | ..... | ..... | ..... | ..... | ..... |

**FIGURE 2**

Non-network data of reference area **until** T

Non-5G network usage data of reference area **until** T

5G usage data of reference area **after** T

Model 1

Non-network data of reference area **until** T

Combined network usage data of reference area **after** T

Model 2

Non-network data of reference area **until** T

Non-5G network usage data of reference area **until** T

Non-5G network usage data of reference area **after** T

Model 3

Non-network data of target area **until** T

Non-5G network usage data of target area **until** T

Non-5G network usage data of target area **after** T

Model 4

Non-network data of target area **until** T

Non-network data of target area **after** T

Model 5

Non-network data of reference area **after** T

Non-5G network usage data of reference area **after** T

5G usage data of reference area **after** T

Model 6

FIGURE 3

FIGURE 4

```
┌─────────────────┐        ┌─────────┐      ┌──────────────────────────┐
│  Non-network    │        │         │      │ First intermediate prediction │
│  data of target │───────▶│ Model 5 │─────▶│ Predicted non-network data │
│  area until T'  │        │         │      │  of target area after T'   │
└─────────────────┘        └─────────┘      └──────────────────────────┘
         │                                                │
         │                                                │                    ┌ ─ ─ ─ ─ ─ ─ ─ ─ ┐
         │                                                │      ┌─────────┐     Second predicted 5G
         │                                                ├─────▶│ Model 6 │───▶│  usage data of target │
         │                                                │      └─────────┘     area after T'
         │                                                │                    └ ─ ─ ─ ─ ─ ─ ─ ─ ┘
         │            ┌─────────┐      ┌──────────────────────────┐
         │            │         │      │ Third intermediate prediction │
         └───────────▶│ Model 4 │─────▶│  Predicted non-5G network  │
┌─────────────────┐   │         │      │ usage data of target area after │
│  Non-5G network │──▶└─────────┘      │             T'             │
│ usage data of target │              └──────────────────────────┘
│  area until T'  │
└─────────────────┘
```

# FIGURE 5

EP 4 503 694 A1

```
┌─────────────────┐                              ┌──────────────────────────┐
│   Non-network   │      ┌─────────┐             │ First intermediate       │
│  data of target │─────▶│ Model 5 │────────────▶│ prediction               │
│  area until T'  │      └─────────┘             │ Predicted non-network    │
└─────────────────┘                              │ data of target area      │
        │                                        │ after T'                 │
        │                                        └──────────────────────────┘
        │                                                     │
        │                                                     │
        │           ┌──────────────────────────┐             │      ┌─────────┐   ┌─ ─ ─ ─ ─ ─ ─ ─ ─ ─┐
        │           │ Fourth intermediate       │            │      │         │   │ Third predicted 5G │
        ├──────────▶│ prediction               │            ├─────▶│ Model 6 │──▶│ usage data of      │
        │    ┌──────┤ Predicted combined        │            │      └─────────┘   │ target area after T'│
        │    │Model2│ network usage data of     │            │                    └─ ─ ─ ─ ─ ─ ─ ─ ─ ─┘
        │    └──────│ target area after T'      │            │
        │           └──────────────────────────┘            │
        │                        │                           │
        │                        │             ┌─────────────┴──────────────┐
        │                        │             │ Sixth intermediate         │
        │                        ▼             │ prediction                 │
        │                      ( − )──────────▶│ Predicted non-5G network   │
        │                        ▲             │ usage data of target area  │
        │                        │             │ after T'                   │
        │                        │             └────────────────────────────┘
        │                        │
┌───────────────┐  ┌─────────┐  ┌──────────────────────────┐
│ Non-5G network│  │ Model 1 │  │ Fifth intermediate       │
│ usage data of │─▶│         │─▶│ prediction               │
│ target area   │  └─────────┘  │ Predicted 5G usage data  │
│ until T'      │               │ of target area after T'  │
└───────────────┘               └──────────────────────────┘
```

FIGURE 6

**Table-1** Internet usage forecast by Prediction-1

| Time(hh:mm:ss) | Internet Usage |
|---|---|
| 00:00:00 | 3683.147 |
| 01:00:00 | 8064.143 |
| 02:00:00 | 5727.87 |
| 03:00:00 | 9498.427 |
| 04:00:00 | 5785.536 |
| 05:00:00 | 608.1893 |
| 06:00:00 | 7031.502 |
| 07:00:00 | 9981.893 |
| 08:00:00 | 1070.061 |
| 09:00:00 | 7552.994 |
| 10:00:00 | 6871.98 |
| 11:00:00 | 895.4668 |
| 12:00:00 | 508.2038 |

**Table-2:** Internet usage forecast by Prediction-2

| Time(hh:mm:ss) | Internet Usage |
|---|---|
| 00:00:00 | 8219.73 |
| 01:00:00 | 5874.985 |
| 02:00:00 | 5097.674 |
| 03:00:00 | 3592.628 |
| 04:00:00 | 8578.931 |
| 05:00:00 | 406.8132 |
| 06:00:00 | 166.7258 |
| 07:00:00 | 3988.859 |
| 08:00:00 | 6003.878 |
| 09:00:00 | 757.2739 |
| 10:00:00 | 5056.35 |
| 11:00:00 | 7930.331 |
| 12:00:00 | 6121.814 |

**Table-3:** Internet usage forecast by Prediction-3

| Time(hh:mm:ss) | Internet Usage |
|---|---|
| 00:00:00 | 6945.108 |
| 01:00:00 | 7098.313 |
| 02:00:00 | 2427.551 |
| 03:00:00 | 6574.66 |
| 04:00:00 | 8773.879 |
| 05:00:00 | 1550.965 |
| 06:00:00 | 6472.981 |
| 07:00:00 | 9720.252 |
| 08:00:00 | 1596.807 |
| 09:00:00 | 9550.177 |
| 10:00:00 | 3067.305 |
| 11:00:00 | 8159.969 |
| 12:00:00 | 9430.118 |

**Table-4:** Calculated 'Min' and 'Max' forecasting range

| Mean | Min | Max |
|---|---|---|
| **6282.662** | **6945.108** | **8219.73** |
| 7012.48 | 7098.313 | 8064.143 |
| 4417.698 | 5097.674 | 5727.87 |
| 6555.238 | | |
| 7712.782 | | |
| 855.3224 | | |
| 4557.07 | | |
| 7897.001 | | |
| 2890.249 | | |
| 5953.482 | | |
| 4998.545 | | |
| 5661.922 | | |
| 5353.379 | | |

FIGURE 7

EP 4 503 694 A1

| Model 1 | Model 2 | | Model 3 | | Model 4 | | Model 5 |

Sixth intermediate prediction
Predicted non-5G network usage data of target area **after** T'

Second intermediate prediction
Predicted non-5G network usage data of target area **after** T'

Third intermediate prediction
Predicted non-5G network usage data of target area **after** T'

First intermediate prediction
Predicted non-network data of target area **after** T'

| Model 6 | | Model 6 | | Model 6 |

First predicted 5G usage data of target area **after** T'

Second predicted 5G usage data of target area **after** T'

Third predicted 5G usage data of target area **after** T'

Range of predicted 5G usage data of target area **after** T'

FIGURE 8

**FIGURE 9**

FIGURE 10

FIGURE 11

**Input: 'N' records** each with **time-step size 'K1'**, recorded **till time 'T'**

Time-series Data

Geographical & Other Data
- Location Details
- Traffic Data
- Date
- Time
- Weather Data
- Population Density
- Economic Status

Other Networks (2G, 3G, 4G, etc.)
- #Active Use
- Video Stream
- Call (IN, OUT)
- SMS (IN, OUT)
- Internet

Input to Model

Features predicted for each of the time steps

Time-series Data

5G Network
- #Active Use
- Video Stream
- Call (IN, OUT)
- SMS (IN, OUT)
- Internet

**Model-1**

**Forecast Model:** 'N' records each with **time-step size 'K1'**, after recorded time, i.e. after **'T'**

FIGURE 12

EP 4 503 694 A1

FIGURE 13

FIGURE 14

FIGURE 15

FIGURE 16

FIGURE 17

FIGURE 18

EP 4 503 694 A1

| | Europäisches Patentamt European Patent Office Office européen des brevets | **EUROPEAN SEARCH REPORT** | Application Number EP 24 17 2396 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/092732 A1 (RAJ MICHAEL ANTONY [US] ET AL) 19 March 2020 (2020-03-19) * paragraph [0012] - paragraph [0015] * * paragraph [0032] - paragraph [0046] * ----- | 1-15 | INV. H04W16/22 ADD. H04L41/14 |
| A | US 2023/063522 A1 (VAKNIN YANIV [IL] ET AL) 2 March 2023 (2023-03-02) * paragraph [0064] - paragraph [0083] * ----- | 1-15 | H04W16/18 |
| A | US 2023/007501 A1 (KOUNEV VELIN [US] ET AL) 5 January 2023 (2023-01-05) * paragraph [0032] * * paragraph [0048] - paragraph [0065] * ----- | 1-15 | |

| | |
|---|---|
| | TECHNICAL FIELDS SEARCHED (IPC) |
| | H04W H04L |

The present search report has been drawn up for all claims

| Place of search | Date of completion of the search | Examiner |
|---|---|---|
| Munich | 27 September 2024 | Vadursi, Michele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

# EP 4 503 694 A1

## ANNEX TO THE EUROPEAN SEARCH REPORT
## ON EUROPEAN PATENT APPLICATION NO.

EP 24 17 2396

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2024

| Patent document cited in search report | Publication date | Patent family member(s) | Publication date |
|---|---|---|---|
| US 2020092732 A1 | 19-03-2020 | NONE | |
| US 2023063522 A1 | 02-03-2023 | NONE | |
| US 2023007501 A1 | 05-01-2023 | US 2022174502 A1 | 02-06-2022 |
| | | US 2023007501 A1 | 05-01-2023 |

EPO FORM P0459

For more details about this annex : see Official Journal of the European Patent Office, No. 12/82